(19) Europäisches Patentamt / European Patent Office / Office européen des brevets

(11) **EP 4 664 667 A1**

(12) **EUROPEAN PATENT APPLICATION**
published in accordance with Art. 153(4) EPC

(43) Date of publication:
**17.12.2025  Bulletin 2025/51**

(21) Application number: **24847655.8**

(22) Date of filing: **17.04.2024**

(51) International Patent Classification (IPC):
$H01M\ 50/593$ (2021.01)   $H01M\ 50/586$ (2021.01)
$H01M\ 50/59$ (2021.01)

(52) Cooperative Patent Classification (CPC):
H01M 50/103; H01M 50/586; H01M 50/59;
H01M 50/593; Y02E 60/10

(86) International application number:
**PCT/CN2024/088290**

(87) International publication number:
**WO 2025/025689 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **01.08.2023  CN 202322048883 U**

(71) Applicant: **Contemporary Amperex Technology Co., Limited**
**Ningde, Fujian 352100 (CN)**

(72) Inventors:
• **KE, Haibo**
 **Ningde, Fujian 352100 (CN)**

• **MAO, Guoan**
 **Ningde, Fujian 352100 (CN)**
• **JIN, Haizu**
 **Ningde, Fujian 352100 (CN)**
• **LI, Quankun**
 **Ningde, Fujian 352100 (CN)**
• **CHEN, Xinxiang**
 **Ningde, Fujian 352100 (CN)**
• **CHEN, Yanlin**
 **Ningde, Fujian 352100 (CN)**

(74) Representative: **Kraus & Lederer PartGmbB**
**Thomas-Wimmer-Ring 15**
**80539 München (DE)**

(54) **BATTERY CELL, BATTERY, AND ELECTRIC DEVICE**

(57)    The present application is applicable to the technical field of batteries, and provides a battery cell, a battery, and an electrical apparatus. The battery cell comprises a shell, an electrode assembly, an insulating structure, and a separation structure. The shell has an inner cavity, and the shell has a first wall; the electrode assembly is provided in the inner cavity; both the separation structure and the insulating structure are provided between the electrode assembly and the first wall; one of the insulating structure and the separation structure is provided with at least two first through holes, and the other is provided with second through holes respectively corresponding to the first through holes; the second through holes comprise an alignment hole, and the cross-sectional area of the alignment hole is greater than that of the corresponding first through hole, or the cross-sectional area of the alignment hole is greater than that of other second through holes. Since the battery cell provided in the present application is provided with the alignment hole, at least two positioning pins may be inserted between the insulating structure and the separation structure for positioning, resulting in more effective positioning.

**FIG. 4**

# Description

The present application claims priority to Chinese patent application No. 202322048883.0 filed with the China National Intellectual Property Administration on August 01, 2023 and entitled "BATTERY CELL, BATTERY, AND ELECTRICAL APPARATUS," which is incorporated herein by reference in its entirety.

## TECHNICAL FIELD

The present application relates to the technical field of batteries, and in particular, to a battery cell, a battery, and an electrical apparatus.

## BACKGROUND

In the production process of a battery, it is required to position an insulating structure and a separation structure to facilitate the subsequent connection of the insulating structure and the separation structure.

In the related art, the insulating structure and the separation structure are each provided with a plurality of through holes, the through holes in the insulating structure correspond to the through holes in the separation structure one by one, and positioning is achieved by passing a plurality of positioning structures through the through holes of the insulating structure and the separation structure in sequence.

However, in the process of positioning the insulating structure and the separation structure, it is difficult to achieve the positioning of the insulating structure and the separation structure through one or more positioning structures, and there is a problem that the positioning is difficult.

## SUMMARY OF THE INVENTION

An object of embodiments of the present application is to provide a battery cell, a battery, and an electrical apparatus, with the aim of solving the technical problem that positioning an insulating structure and a separation structure is difficult in the prior art.

To achieve the aforementioned object, the following technical solutions are employed in the present application.

In a first aspect, there is provided a battery cell, including:

a shell, the shell having an inner cavity, the shell having a first wall;
an electrode assembly, provided inside the inner cavity;
an insulating structure, at least a portion of the insulating structure being located between the electrode assembly and the first wall;
a separation structure, the separation structure being provided between the electrode assembly and the first wall;

one of the insulating structure and the separation structure being provided with at least two first through holes, the other being provided with second through holes respectively corresponding to the first through holes, in a direction parallel to the first wall, the cross-sectional area of the second through hole being greater than or equal to that of the first through hole provided correspondingly thereto, the plurality of second through holes including at least one alignment hole;
the cross-sectional area of the alignment hole being greater than that of the first through hole provided correspondingly thereto, or the cross-sectional area of the alignment hole being greater than that of any other one of the second through holes.

In the manufacturing process of this battery cell, the insulating structure and the separation structure are positioned through a positioning structure, and the positioning structure first extends into the first through hole and then extends into the second through hole corresponding to the first through hole. Since multiple positioning structures are all usually of the same shape and dimension, the insulating structure and the separation structure are relatively positioned to a certain extent after one of the positioning structures is inserted into the corresponding first through hole and a positioning hole that is not the alignment hole if the cross-sectional area of the alignment hole among the second through holes is greater than that of the first through hole provided correspondingly thereto, or if the cross-sectional area of the alignment hole is greater than that of other second through holes. And, since the cross-sectional area of the alignment hole is relatively larger, part of the alignment hole may correspond to the first through hole even if there is a certain deviation in a distance between the alignment hole and the adjacent second through hole. Therefore, at least another positioning structure may be inserted into the alignment hole after being inserted into the first through hole, such that the insulating structure and the separation structure may be positioned via at least two alignment pins, and the positioning is more effective.

In some embodiments, the second through hole includes at least one alignment hole and one positioning hole, the cross-sectional area of the alignment hole is greater than that of the positioning hole, the cross-sectional area of the positioning hole is equal to that of the corresponding first through hole, and the positioning hole is the same as the corresponding first through hole in shape.

In this way of arrangement, the positioning hole plays a role of reference positioning, that is, in the positioning process, the positioning structure is first inserted into the first through hole corresponding to the positioning hole, and then inserted into the positioning hole. Since the positioning hole is equal to the first through hole in cross-sectional area, the positioning hole and the first through hole corresponding thereto have a better limiting effect on the positioning structure.

In some embodiments, the cross-sectional area of the first through hole corresponding to the alignment hole is equal to that of the alignment hole, and the first through hole corresponding to the alignment hole is the same as the alignment hole in shape.

In this way of arrangement, since the shape and cross-sectional area of the first through hole are the same as those of the second through hole corresponding thereto, it is convenient to process and manufacture the first through hole and the second through hole.

In some embodiments, at least one second through hole and the first through hole provided correspondingly thereto are both round holes, and the two round holes are equal in diameter.

In this way of arrangement, the round hole is easy to process and the round hole has a better limiting effect on the cylindrical positioning structure.

In some embodiments, the diameter of the round hole is 1 mm-20 mm.

In this way of arrangement, a more suitable size of the round hole may be selected depending on the dimension of the first wall to achieve more effective positioning.

In some embodiments, the diameter of the round hole is 2.5 mm-7 mm.

In this way of arrangement, the dimension of the round hole may be set depending on that of the positioning structure commonly used in the related art.

In some embodiments, in a first direction, the dimension of the alignment hole is greater than that of the first through hole corresponding thereto, or the dimension of the alignment hole is greater than that of other second through holes, the first direction being parallel to a length direction of the first wall.

In this way of arrangement, the alignment hole may reduce the influence of the dimensional errors of the insulating structure and the separation structure in the first direction upon the positioning effect.

In some embodiments, multiple first through holes are provided in spaced manner in the first direction.

In this way of arrangement, the alignment hole may reduce the influence of the dimensional errors of the insulating structure and the separation structure in the first direction upon the positioning effect.

In some embodiments, in a second direction, the dimension of the first through hole is equal to that of the second through hole corresponding thereto, the second direction being parallel to a width direction of the first wall.

In this way of arrangement, the first through hole and the second through hole have a better limiting effect on the positioning structure, thereby achieving more effective positioning for the insulating structure and the separation structure in the second direction.

In some embodiments, the first through hole has a first inner wall and a second inner wall distributed along the first direction, the alignment hole has a third inner wall and a fourth inner wall distributed along the first direction, as well as a fifth inner wall and a sixth inner wall distributed along the second direction, the first inner wall is the same as the third inner wall in shape, the second inner wall is the same as the third inner wall in shape, and the fifth inner wall and the sixth inner wall are each parallel to the first direction.

In this way of arrangement, the positioning structure can have a larger area of contact with the third inner wall and the fourth inner wall, such that positioning is more effective, and the inner wall of the alignment hole is more effectively utilized to limit the positioning structure.

In some embodiments, at least one first through hole is a round hole, and the first inner wall, the second inner wall, the third inner wall, and the fourth inner wall are each an arc-shaped inner wall; alternatively,

at least one first through hole is a rectangular hole, the alignment hole is a rectangular hole, the first inner wall is parallel to the third inner wall, and the second inner wall is parallel to the fourth inner wall; alternatively,

at least one first through hole is a triangular hole, the alignment hole is a trapezoidal hole, the first inner wall is parallel to the third inner wall, and the second inner wall is parallel to the fourth inner wall.

In this way of arrangement, for positioning structures of different shapes, first through holes of different shapes may be selected, and second through holes of different shapes may be selected, improving relative limiting among the first through holes, the second through holes and the positioning structures.

In some embodiments, in the first direction, a difference between the dimension of the alignment hole and the dimension of the corresponding first through hole is in a range of greater than 0 mm and less than or equal to 3 mm; alternatively,

in the first direction, a difference between the dimension of the alignment hole and the dimension of other second through holes is in a range of greater than 0 mm and less than or equal to 3 mm.

In this way of arrangement, the alignment hole and the first through hole corresponding thereto have a better limiting effect on the positioning structure, allowing positioning for the insulating structure and the separation structure in the second direction to be improved.

In some embodiments, in the first direction, a difference between the dimension of the alignment hole and the dimension of the first through hole is in a range of greater than or equal to 0 mm and less than or equal to 0.5 mm; alternatively,

in the first direction, a difference between the dimension of the alignment hole and the dimension of other second through holes is in a range of greater than or equal to 0 mm and less than or equal to 0.5 mm.

In this way of arrangement, the alignment hole and the first through hole corresponding thereto have a better limiting effect on the positioning structure, allowing positioning for the insulating structure and the separation structure in the second direction to be improved.

In some embodiments, in the second direction, the first through hole is located in a middle region of the insulating structure or the separation structure, the second direction being parallel to the width direction of the first wall.

In this way of arrangement, after the positioning structure is inserted, the positioning structure is located in the middle region of the insulating structure and the separation structure, such that the positioning is more effective.

In some embodiments, in the second direction, the dimension of the first wall is W1, a distance between the first through hole and a side wall of the shell is W2, and then:

$$|W2 - W1/2| \leq 5 \text{ mm.}$$

In this way of arrangement, after the positioning structure is inserted, the positioning structure is located in the middle region of the insulating structure and the separation structure and has similar distances from long sides, on two sides, of the insulating structure and the separation structure, such that the positioning is relatively more effective.

In some embodiments, in the second direction, distances between the first through hole and side walls, on both sides, of the shell are equal.

In this way of arrangement, after the positioning structure is inserted, the positioning structure is located at a midline of the insulating structure and the separation structure in a width direction, such that the positioning is more effective and relative torsion between the insulating structure and the separation structure may be further reduced.

In some embodiments, the multiple first through holes are symmetrically distributed in pairs relative to a center line of the first wall in the length direction, a center distance of two symmetrical first through holes is C1, a length of the first wall is L, and then C1 = (L - 10 mm, L - 60 mm).

In this way of arrangement, the first through hole is provided in the insulating structure or the separation structure. Taking the first through hole being provided in the insulating structure as an example, there is a certain distance between the first through hole and each of short sides of the insulating structure on two sides, such that structural strength of a region on the insulating structure between the first through hole and the short side is relatively greater.

In some embodiments, the separation structure is provided between the insulating structure and the first wall, the first through hole is provided in the separation structure, and the second through hole is provided in the insulating structure.

In this way of arrangement, the insulating structure is provided closer to the electrode assembly, and the separation structure is located between the insulating structure and the first wall, facilitating production and processing.

In some embodiments, the separation structure includes a plate body, the plate body includes a first surface provided perpendicular to a thickness direction of the plate body, the first through hole is provided in the plate body in run-through manner along the thickness direction of the plate body, the first surface is provided with a support block, and the support block is provided in a region of the first surface where no first through hole is provided.

In this way of arrangement, the support block is provided to improve structural strength of the plate body.

In some embodiments, the separation structure includes a plate body and a support block, the plate body includes a first surface provided along a thickness direction of the plate body, the first through hole is provided in the plate body in run-through manner along the thickness direction of the plate body, the first surface is provided with the support block, the support block is provided with a third through hole along a thickness direction of the support block, the third through hole is provided correspondingly to the first through hole, and the third through hole is communicated with the first through hole.

In this way of arrangement, the third through hole is provided for the positioning structure to pass through, such that the support block and the plate body may be positioned via the positioning structure.

In some embodiments, the cross-sectional area of the third through hole is greater than or equal to that of the first through hole.

In this way of arrangement, the third through hole does has no blocking for the first through hole, making it convenient for the positioning structure to pass through.

In some embodiments, there are a plurality of support blocks, the plurality of support blocks are each provided with a third through hole, the plurality of third through holes are the same in shape, and the plurality of third through holes are the same in dimension.

In this way of arrangement, the multiple support blocks are provided such that the separation structure has a fluid channel, available for a flow of airflow between the first wall and the electrode assembly, thereby improving passage of the air flow between the first wall and the electrode assembly. The multiple support blocks are the same in structure, allowing convenience for producing and manufacturing on a same production line.

In some embodiments, the cross-sectional area of each third through hole is equal to that of the alignment hole.

Since the dimension of the alignment hole is relatively larger, the third through hole is equal to the alignment hole in cross-sectional area, also enabling the third through hole to have no blocking for the first through hole and the second through hole.

In some embodiments, at least one lateral edge of the support block is provided flush with at least one lateral edge of the plate body.

In this way of arrangement, the support block and the plate body may be positioned via the edges.

In some embodiments, the first wall is provided with a pressure relief structure, the first through hole and the pressure relief structure are provided in spaced manner in the length direction of the first wall, and the second through hole and the pressure relief structure are provided in spaced manner in the length direction of the first wall.

In this way of arrangement, the first through hole and the second through hole are both provided at positions relatively far away from the pressure relief structure, thereby allowing for a reduction in the contact of anode powder discharged through the first through hole or the second through hole with the pressure relief structure.

In some embodiments, the separation structure is provided with a fourth through hole, and the cross-sectional area of the fourth through hole is less than that of any one first through hole.

In this way of arrangement, the separation structure is provided with the fourth through hole, such that the separation structure is lighter in weight, thereby reducing the total weight of the battery cell.

In some embodiments, the separation structure is only provided with two holes, the insulating structure is only provided with two holes, the two holes in one of the separation structure and the insulating structure are both the first through holes, and the two holes in the other are both the second through holes.

In this way of arrangement, since the separation structure and the insulating structure are provided with no other holes than the first through hole and the second through hole, the amount of the anode powder moving between the separation structure and the first wall may be reduced.

In some embodiments, the insulating structure includes an insulating film, the insulating film includes a first portion and a second portion, the first portion is located between the electrode assembly and the first wall, the second portion is connected to the first portion, and the second portion is annular and encloses an outer periphery of the electrode assembly.

In this way of arrangement, the insulating film encloses the electrode assembly to a greater extent, providing a better insulating effect.

In a second aspect, there is provided a battery, including the battery cell provided in the aforementioned technical solution.

Since including the aforementioned battery cell, the battery has at least all the beneficial effects of the aforementioned battery cell, which will not be elaborated here.

In a third aspect, there is provided an electrical apparatus, the electrical apparatus including the battery provided in the aforementioned technical solution, the battery being used to provide electrical energy.

Since including the aforementioned battery, the electrical apparatus has at least all the beneficial effects of the aforementioned battery, which will not be elaborated here.

## BRIEF DESCRIPTION OF DRAWINGS

To describe the technical solutions in the embodiments of the present application more clearly, the following will briefly describe the accompanying drawings required for describing the embodiments or the prior art. Apparently, the accompanying drawings in the following description show merely some embodiments of the present application, and for a person of ordinary skill in the art, other drawings may be derived according to these accompanying drawings without creative efforts.

FIG. 1 is a structural schematic diagram of an electrical apparatus provided in an embodiment of the present application;
FIG. 2 is a structural schematic diagram of a battery provided in one embodiment of the present application;
FIG. 3 is an exploded view of parts of a battery cell provided in a first embodiment of the present application;
FIG. 4 is an exploded view of structural parts of an insulating structure and a separation structure in the battery cell in FIG. 3;
FIG. 5 is an exploded view of parts of partial structure in a battery cell provided in a second embodiment of the present application;
FIG. 6 is a schematic diagram of a relative position of a second through hole and a shell in the battery cell in FIG. 3;
FIG. 7 is a schematic diagram of a relative position of a first through hole and a second through hole in a battery cell provided in a third embodiment of the present application;
FIG. 8 is a schematic diagram of a relative position of the insulating structure and the separation structure in the battery cell in FIG. 3;
FIG. 9 is a schematic diagram of the unfolded insulating structure in the battery cell in FIG. 3;
FIG. 10 is a schematic diagram of a relative position of a first through hole and a second through hole in a battery cell provided in a fourth embodiment of the present application;
FIG. 11 is a schematic diagram of a relative position of a first through hole and a first wall in a battery cell provided in a fifth embodiment of the present application;
FIG. 12 is a schematic diagram of a relative position of a first through hole and a second through hole in a battery cell provided in a sixth embodiment of the present application;

FIG. 13 is a schematic diagram of a relative position of a first through hole and a second through hole in a battery cell provided in a seventh embodiment of the present application;

FIG. 14 is a schematic diagram of a relative position of a first through hole and a second through hole in a battery cell provided in an eighth embodiment of the present application;

FIG. 15 is an exploded view of structural parts of an insulating structure and a separation structure in a battery cell provided in a ninth embodiment of the present application;

FIG. 16 is a schematic diagram of the unfolded insulating structure in FIG. 15;

FIG. 17 is a schematic diagram of a relative position of a first through hole and a first wall in the battery cell in FIG. 15;

FIG. 18 is an exploded view of parts of partial structure in a battery cell provided in a tenth embodiment of the present application;

FIG. 19 is an exploded view of parts of a separation structure in FIG. 18;

FIG. 20 is a fitted diagram of the separation structure in FIG. 19;

FIG. 21 is a partial enlarged view of a position A in FIG. 20;

and FIG. 22 is a schematic diagram of a relative position of a first through hole and a first wall in a battery cell provided in an eleventh embodiment of the present application.

The reference numerals involved in the above drawings are detailed as follows:

1, electrical apparatus;

10, battery; 20, control mechanism; 30, driving mechanism;

100, battery cell; 200, box;

101, top cover patch; 102, top cover; 103, adapting sheet; 104, protective film;

110, shell; 111, first wall;

120, electrode assembly; 121, cell body; 122, tab;

130, insulating structure; 131, first portion; 132, second portion; 132a, first subordinate film layer; 132b, second subordinate film layer;

140, separation structure; 141, plate body; 1411, fourth through hole; 142, support block; 1421, third through hole;

150, first through hole; 151, first inner wall; 152, second inner wall;

160, second through hole; 161, alignment hole; 162, positioning hole; 163, third inner wall; 164, fourth inner wall; 165, fifth inner wall; 166, sixth inner wall; and 170, pressure relief structure.

## DETAILED DESCRIPTION

In order to make the technical problems, technical solutions, and beneficial effects to be solved by the present application clearer, the following is a further detailed explanation of the present application in conjunction with the accompanying drawings and embodiments. It should be understood that the specific embodiments described herein are merely used to explain the present application but are not intended to limit the present application.

In the description of the embodiments of the present application, the term "plurality of' refers to two or more (including two).

In the description of the embodiments of the present application, unless otherwise expressly specified and limited, the technical terms "mount," "join," "connect," "fixed", etc. should be understood in a broad sense, for example: a fixed connection, a detachable connection, or an integral connection; a mechanical connection, or an electrical connection; a direct connection, an indirect connection through an intermediate medium, an internal communication of two elements, or interaction between two elements. For those of ordinary skill in the art, the specific meanings of the aforementioned terms in the embodiments of the present application may be understood according to specific situations.

It should be understood that orientations or positional relationships indicated by the terms "length", "width", "upper", "lower", "front", "rear", "left", "right", "vertical", "horizontal", "top", "bottom", "inner", "outer", and the like are orientations or positional relationships as shown in the drawings, and are only for the purpose of facilitating and simplifying the descriptions of the present application instead of indicating or implying that the battery cell or elements indicated must have particular orientations, and be constructed and operated in the particular orientations, so that these terms are not construed as limiting the present application.

In addition, the terms "first" and "second" are merely intended for a purpose of description, and shall not be understood as an indication or implication of relative importance or implicit indication of the number of indicated technical features. From this, features defined as "first" and second" may explicitly or implicitly include one or more features. In the description of the present application, "a plurality of" means two or more, unless otherwise expressly and specifically defined.

in the embodiments of the present application, the battery cell may be a secondary battery, and the secondary battery refers to a battery cell that may be used continually by activating an active material by means of charging after the battery cell is discharged. The battery cell may be a lithium-ion battery, a sodium-ion battery, a sodium/-lithium-ion battery, a lithium metal battery, a sodium metal battery, a lithium-sulfur battery, a magnesium-ion battery, a nickel-hydrogen battery, a nickel-cadmium battery, a lead storage battery, or the like, which is not limited in the embodiments of the present application.

The battery cell may be a cylindrical battery cell, a prismatic battery cell, a pouch cell, or a battery cell in other shapes. The prismatic battery cell includes a square-case battery cell, a blade battery cell, and a polygonal-prism battery. The polygonal-prism battery is, for example, a hexagonal-prism battery, or the like.

The battery cell includes a shell and an electrode assembly. The shell includes a case and an end cover assembly. The case has an opening. The end cover assembly covers the opening of the case to form an inner cavity with the case. The shell may be a steel shell, an aluminum shell, a plastic shell, a composite metal shell, an aluminum-plastic film, or the like.

The electrode assembly is mounted in the inner cavity. The electrode assembly includes a cell body. The cell body is provided with a tab, and the tab includes a positive tab and a negative tab. The end cover assembly includes a top cover and a top cover patch, the top cover patch being provided on a side of the top cover facing away from the case. The top cover has terminals mounted thereon. The electrode terminals include a positive electrode terminal and a negative electrode terminal. The positive tab is connected to the positive electrode terminal, and the negative tab is connected to the negative electrode terminal. The tab is connected to the electrode terminal through an adapting sheet. The adapting sheet is used to prevent damage to the battery or burning of other components when the electrode assembly is short-circuited or overcharged or over-discharged, thereby ensuring the safety of battery use.

An insulating structure and a separation structure are provided between the cell body and the case, and a protective film is attached to the outer side of the shell.

In the relevant design, in order to facilitate the alignment of a bottom guard plate and the insulating structure, so as to allow for a subsequent operation of connecting the bottom guard plate and the insulating structure, the bottom guard plate is generally provided with a plurality of through holes, and the insulating structure is provided with a plurality of through holes. The through holes in the bottom guard plate and the through holes in the insulating structure are the same in shape and equal in dimension. The through holes in the bottom guard plate and the through holes in the insulating structure correspond one to one and are communicated with each other. In aligning the bottom guard plate with the insulating structure, an auxiliary alignment structure is employed. The auxiliary alignment structure is provided with a plurality of positioning structures (e.g. positioning pins) thereon. The positioning structures are the same, in sectional shape and quantity, as and dimensionally match the through holes in the bottom guard plate. The positioning structures are respectively matched with the through holes, the positioning structures are respectively and correspondingly passed through the through holes in the bottom guard plate and the through holes in the insulating structure corresponding to the positioning structures, and thus, the bottom guard plate and the insulating structure are positioned at multiple locations by means of the plurality of positioning structures to achieve the positioning for the bottom guard plate and the insulating structure.

However, due to manufacturing errors present in the production and manufacturing process, it is likely that a distance between adjacent through holes in the bottom guard plate is not equal to a distance between two adjacent through holes in the insulating structure. That is to say, if one through hole in the bottom guard plate is aligned with one through hole in the insulating structure, another adjacent through hole in the bottom guard plate cannot be aligned with another adjacent through hole in the insulating structure. In other words, the positioning structure cannot be passed through another adjacent through hole in the bottom guard plate and another adjacent through hole in the insulating structure, such that it is difficult to position the insulating structure and the bottom guard plate through one or more positioning structures, affecting the alignment result for the bottom guard plate and the insulating structure.

Based on the above considerations, in order to solve the problem above, a battery cell is designed. The battery cell includes a shell, an electrode assembly, an insulating structure, and a separation structure. The shell has a first wall. One of the insulating structure and the separation structure is provided with a first through hole, and the other is provided with a second through hole. There are both a plurality of first through holes and a plurality of second through holes, and the first through holes and the second through holes are provided by one to one correspondence. The plurality of second through holes include at least one alignment hole, and the cross-sectional area of the alignment hole is greater than that of the first through hole provided correspondingly thereto, or the cross-sectional area of the alignment hole is greater than that of any other one of the second through holes. In this battery cell, the positioning structure first extends into the first through hole and then extends into the second through hole corresponding to the first through hole. Since multiple positioning structures are all usually of the same shape and dimension, the insulating structure and the separation structure are relatively positioned to a certain extent after one of the positioning structures is inserted into the corresponding first through hole and a positioning hole that is not the alignment hole if the cross-sectional area of the alignment hole among the second through holes is greater than that of the first through hole provided correspondingly thereto. And, since the cross-sectional area of the alignment hole is relatively larger, part of the alignment hole may correspond to the first through hole even if there is a certain deviation in a distance between the alignment hole and the adjacent second through hole. Therefore, at least another positioning structure may be inserted into the alignment hole after being inserted into the first through hole, such that the insulating structure and the separation structure may be positioned via at least two alignment pins, and the positioning is more effective. If the cross-sectional area of the alignment hole is greater than that of other second through holes, there is at least a partial corresponding region between the alignment hole and the first through hole for the positioning structure to insert into even though there is a certain deviation in a distance between the alignment hole and the adjacent second through hole. That is, after one of the positioning structures is inserted into the corresponding first through hole and the positioning hole that is not the alignment hole, at least another positioning structure may be inserted into the alignment hole after being inserted into the first through hole. Therefore, the insulating structure and the separation structure may be positioned via at least two alignment pins, and the positioning is more effective.

The battery cell provided in this embodiment can be used for a battery, the battery can be used for an electrical apparatus, and the electrical apparatus include, but is not limited to, a mobile phone, a portable device, a laptop, an electric bike, an electric vehicle, a ship, a spacecraft, an electronic toy, and an electric tool, etc. For example, the spacecraft includes an airplane, a rocket, a space shuttle, a spaceship and the like; the electronic toy includes a fixed or mobile electric toy, such as a game console, a toy electric vehicle, a toy electric ship, a toy electric aircraft and the like; and the electric tool includes a metal-cutting power tool, a grinding power tool, an assembly power tool and a railway power tool, such as an electric drill, an electric grinder, an electric wrench, an electric screwdriver, an electric hammer, an electric impact drill, a concrete vibrator, and an electric planer.

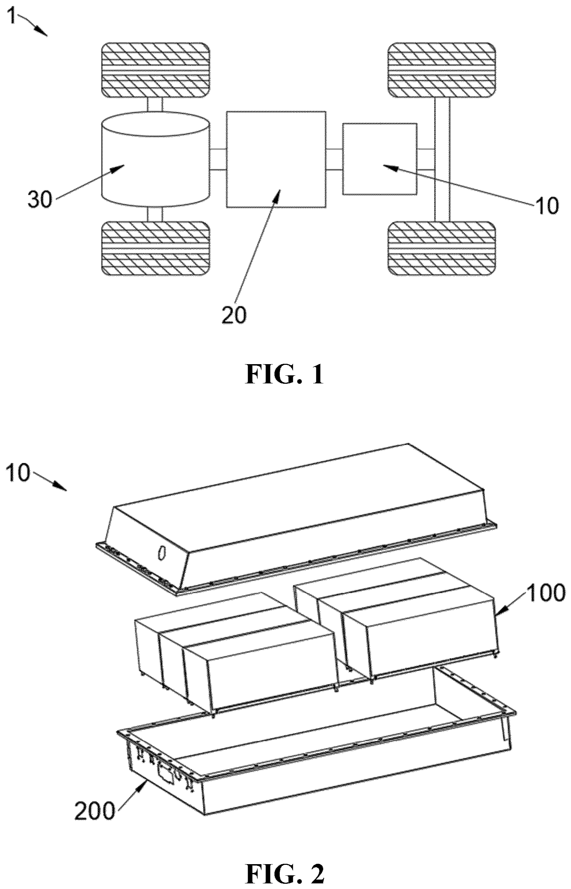

Referring to FIGS. 1 and 2, for convenience of description, a vehicle serving as the electrical apparatus 1 is taken as an example in the present example. The vehicle may be a fuel vehicle, a gas vehicle, or a new energy vehicle. The new energy vehicle may be a pure electric vehicle, a hybrid vehicle, or an extended-range vehicle, etc. A driving mechanism 30, a control mechanism 20, and a battery 10 may be provided inside the vehicle. The driving mechanism 30 may be a motor or the like, and the control mechanism 20 is used to control the battery 10 to power the driving mechanism 30. For example, the battery 10 may be provided at the bottom or head or tail of the vehicle. The battery 10 may be used to power other devices of the vehicle, for example, the battery 10 may be used as an operating power source for the vehicle, which is used for a circuit system of the vehicle, for example, for meeting operating power requirements when the vehicle is starting, navigating, and running. In another example, the battery 10 may not only be used as the operating power source for the vehicle, but also may be used as a driving power source for the vehicle to provide driving force to the vehicle in place of or partially in place of fuel or natural gas. The vehicle in this example employs the aforementioned battery 10, and improving the reliability of the battery 10 can help improve the reliability of the electrical apparatus 1.

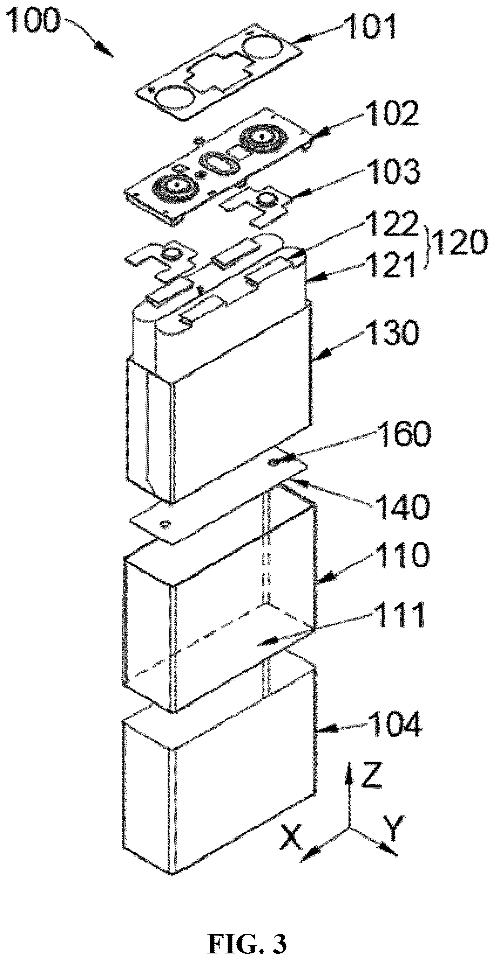

Referring to FIGS. 3 to 5, this embodiment provides a battery cell 100, including a shell 110, an electrode assembly 120, an insulating structure 130, and a separation structure 140. The shell 110 has an inner cavity, and the shell 110 has a first wall 111; the electrode assembly 120 is provided in the inner cavity; at least part of the insulating structure 130 is located between the electrode assembly 120 and the first wall 111; the separation structure 140 is provided between the electrode assembly 120 and the first wall 111; one of the insulating structure 130 and the separation structure 140 is provided with at least two first through holes 150, and the other is provided with second through holes 160 respectively corresponding to the first through holes 150; the first through holes 150 and the second through holes 160 are provided by one to one correspondence, and in a direction parallel to the first wall 111, the cross-sectional area of each second through hole 160 is greater than or equal to that of the first through hole 150 corresponding thereto; the multiple second through holes 160 include at least one alignment hole 161, and the cross-sectional area of the alignment hole 161 is greater than that of the first through hole 150 corresponding thereto, or the cross-sectional area of the alignment hole 161 is greater than that of any other one of the second through holes 160.

The shell 110 forms an external case structure for the battery cell 100. The shell 110 is at least partially hollow to form the inner cavity. The shell 110 has the first wall 111. The first wall 111 is one of walls of the shell 110. The first wall 111 may be at least one of a bottom wall, a top wall, or a side wall of the shell 110.

In this embodiment, a length direction of the battery cell 100 is an X direction, a width direction is a Y direction, and a height direction is a Z direction.

In some examples, the shell 110 includes a case and an end cover assembly, a protective film 104 is attached to the outer side of the case, the case has an opening, the end cover assembly covers the opening of the case to form the inner cavity with the case, and the case can be a steel case, an aluminum case, a plastic case, a composite metal case, or an aluminum-plastic film, etc. The first wall 111 may be located on the case or on the end cover assembly. The electrode assembly 120 is mounted in the inner cavity, and the electrode assembly 120 may be of a wound structure or a stacked structure. The electrode assembly 120, the electrode assembly 120 may be placed into the inner cavity through the opening of the case. The electrode assembly 120 includes a cell body 121. The cell body 121 is provided with a tab 122, and the tab 122 includes a positive tab and a negative tab. The end cover assembly includes a top cover 102 and a top cover patch 101, the top cover patch 101 being disposed on a side of the top cover 102 facing away from the case. The top cover 102 has electrode terminals mounted thereon. The electrode terminals include a positive electrode terminal and a negative electrode terminal. The positive tab is connected to the positive electrode terminal, and the negative tab is connected to the negative electrode terminal. The tab 122 is connected to the electrode terminals through an adapting sheet 103. The adapting sheet 103 is used to prevent damage to the battery 10 or burning of other components when the electrode assembly 120 is short-circuited or overcharged or over-discharged, thereby ensuring the safety of battery 10 use.

The separation structure 140 is mounted in the inner cavity and is at least partially located between the electrode assembly 120 and the first wall 111. The insulating structure 130 is used to separate the electrode assembly 120 from the shell 110 to reduce contact of the electrode assembly 120 with the shell 110. The separation structure 140 is used to create a barrier between the first wall 111 and the electrode assembly 120 such that the electrode assembly 120 cannot contact the first wall 111.

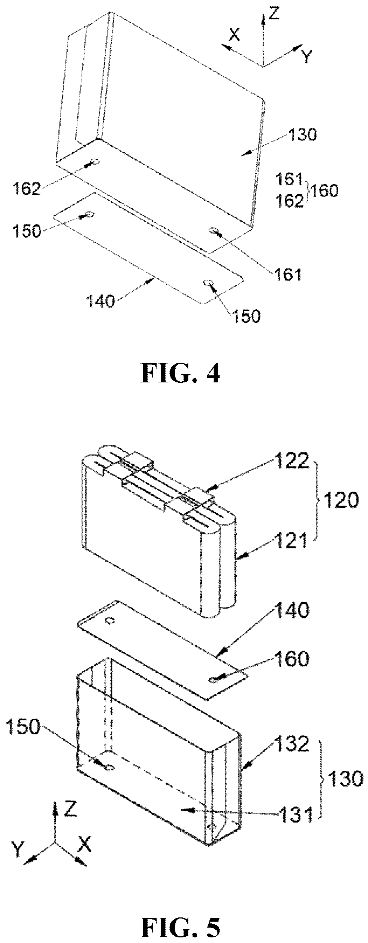

As shown in FIG. 3, in one possible implementation, the separation structure 140 is located between the insulating structure 130 and the first wall 111. As shown in FIG. 5, in another feasible implementation, the separation structure 140 is located on a side of the insulating structure 130 facing away from the first wall 111, that is, the separation structure 140 is located between the insulating structure 130 and the electrode assembly 120.

Upon positioning the separation structure 140 and the insulating structure 130, in one operation mode, a positioning structure is first passed through the separation structure 140 and then through the insulating structure 130. In this mode, as shown in FIG. 4, the separation structure 140 is provided with a first through hole 150, and the insulating structure 130 is provided with a second through hole 160. In another operation mode, the positioning structure is first passed through the insulating structure 130 and then through the separation structure 140. In this mode, as shown in FIG. 5, the insulating structure 130 is provided with a first through hole 150, and the separation structure 140 is provided with a second through hole 160. That is, depending on an operation flow at the time when the separation structure 140 and the insulating structure 130 are positioned, the structure through which the positioning structure is first passed is provided with the first through hole 150, and the structure through which the positioning structure is then passed is provided with the second through hole 160.

For the convenience of description, the following, further explanation and illustration is made by taking the example that the separation structure 140 is provided with the first through hole 150 and the insulating structure 130 is provided with the second through hole 160.

The first through hole 150 and the second through hole 160 are the same in quantity. There are at least two first through holes 150, and then there also are at least two second through holes 160.

The plurality of first through holes 150 are provided at intervals, and the plurality of first through holes 150 and the plurality of second through holes 160 are provided by one to one correspondence. The first through hole 150 and the second through hole 160 being provided in correspondence may be the case that the first through hole 150 completely corresponds to the second through hole 160, or that the entire first through hole 150 corresponds to a portion of the second through hole 160.

The cross-sectional area of the first through hole 150 and the cross-sectional area of the second through hole 160 are both cross-sectional areas in the direction parallel to the first wall 111. Since the cross-sectional area of the second through hole 160 is equal to or greater than that of the first through hole 150, where the second through hole 160 and the first through hole 150 are equal in cross-sectional area, projections of the second through hole 160 and the first through hole 150 corresponding thereto on the first wall 111 coincide, that is, this second through hole 160 completely corresponds to the first through hole 150 corresponding thereto. Where the cross-sectional area of the second through hole 160 is greater than that of the first through hole 150 corresponding thereto, the projection of the first through hole 150 corresponding thereto on the first wall 111 is completely within the range of the projection of the second through hole 160 on the first wall 111, that is, the entire first through hole 150 corresponds to a portion of the second through hole 160.

Part or all of the second through holes 160 are referred to as alignment holes 161, and the alignment holes 161 are holes among the second through holes 160 whose cross-sectional area is greater than that of the first through holes 150 corresponding thereto, or holes whose cross-sectional area is greater than that of any other one of second through holes 160.

Exemplarily, if there is a second through hole 160 having a greater cross-sectional area than the first through hole 150 corresponding to the second through hole 160, this second through hole 160 is referred to as an alignment hole 161. Among the plurality of second through holes 160, all of the second through holes 160 may be alignment holes 161, or part of the second through holes 160 may be alignment holes 161, while another part of the second through holes 160 may not be alignment holes 161.

If the plurality of second through holes 160 are not equal in cross-sectional area, one or more second through holes 160 having a greater cross-sectional area than other second through holes 160 are referred to as alignment holes 161, and the cross-sectional area of this alignment hole 161 may be greater than that of the first through hole 150 corresponding thereto, or may be equal to that of the first through hole 150 corresponding thereto. In this case, among the plurality of second through holes 160, part of the second through holes 160 are alignment holes 161, and another part of the second through holes 160 are not alignment holes 161. To facilitate distinguishing of the alignment holes 161 from other second through holes 160, the second through holes 160 other than the alignment holes 161 are referred to as positioning holes 162.

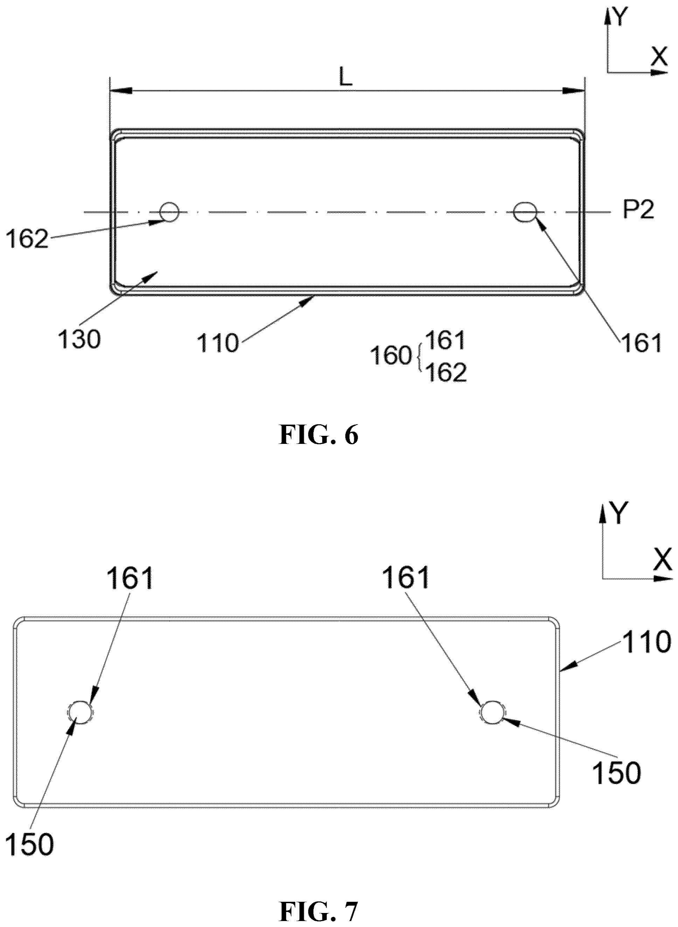

Among the plurality of second through holes 160, there may be one or more alignment holes 161, there may be one or more positioning holes 162, or no positioning hole 162 may be provided. Exemplarily, there are two first through holes 150, there are two second through holes 160, and among the two second through holes 160, as shown in FIG. 6, one is a positioning hole 162 and the other is an alignment hole 161, or, as shown in FIG. 7, both second through holes 160 are alignment holes 161. In another example, there are three first through holes 150, there are three second through holes 160, and among the three second through holes 160, when there is one alignment hole 161, there are two positioning holes 162; when there are two alignment holes 161, there is one positioning hole 162; when there are three alignment holes 161, there is no positioning hole 162.

In the positioning process for the insulating structure 130 and the separation structure 140, the positioning structure is first passed through the first through hole 150, and then through the second through hole 160 corresponding to the first through hole 150. Since there is at least one alignment hole 161 among the second through holes 160, if the cross-sectional area of the alignment hole 161 is greater than that of the corresponding first through hole 150, the alignment hole 161 may still correspond to the entire first through hole 150 within a certain deviation range as the cross-sectional area of the alignment hole 161 is greater than that of the first through hole 150, even though a distance between the alignment hole 161 and the second through hole 160 adjacent thereto is subjected to errors due to manufacturing such that the alignment hole 161 and the corresponding first through hole 150 are not centrally correspondingly provided. That is, the positioning structure may still extend into the alignment hole 161 after being passed through the first through hole 150, and thus, the positioning of the insulating structure 130 and the separation structure 140 via at least two positioning structures is achieved, and the positioning is more effective.

Where the cross-sectional area of the alignment hole 161 is greater than that of other second through holes 160, the second through holes 160 include both the alignment hole 161 and the positioning hole 162, and the cross-sectional area of the alignment hole 161 is greater than that of the positioning hole 162. Since the cross-sectional area of the positioning hole 162 is greater than or equal to that of the corresponding first through hole 150, and the first through hole 150 allows the positioning structure to pass through, both the positioning hole 162 and the alignment hole 161 allow the positioning structure to be inserted. Since the cross-sectional area of the alignment hole 161 is greater than that of the positioning hole 162, the cross-sectional area of the alignment hole 161 is inevitably greater than that of the positioning structure. After the positioning structure is passed through the first through hole 150 corresponding to the alignment hole 161, the positioning structure, within the certain deviation range, may extend into the alignment hole 161. That is, positioning of the insulating structure 130 and the separation structure 140 via at least two positioning structures is achieved, and the positioning is more effective.

As can be seen from the above, since the alignment hole 161 is provided among the second through holes 160, even though there is a manufacturing error in the distance between the alignment hole 161 and the second through hole 160 adjacent thereto, or there is a manufacturing error in the distance between two adjacent first through holes 150, it may still be ensured that at least two positioning structures may be inserted between the insulating structure 130 and the separation structure 140, to position the insulating structure 130 and the separation structure 140 via the two positioning structures. The positioning is more effective.

It is worth noting that since the positioning structure is first passed through the first through hole 150 and then needs to extend into the second through hole 160, the diameter of a smallest concentric circle projected by the second through hole 160 on the first wall 111 is greater than or equal to that of a smallest concentric circle projected by the first through hole 150 on the first wall 111. In other words, the projection of the second through hole 160 on the first wall 111 can at least completely enclose the outer periphery of that of the first through hole 150 on the first wall 111. On this basis, since the cross-sectional area of the second through hole 160 is greater than the that of the corresponding first through hole 150, the positioning structure that can be passed through the first through hole 150 can at least move within a certain range in one or several directions within the second through hole 160. As such, when a manufacturing error occurs to the first through hole 150 such that an actual providing position of the first through hole 150 is offset within a certain range relative to a preset position, the first through hole 150 may still correspond to a partial area of the second through hole 160, that is, the positioning structure may still be passed through the second through hole 160 after being passed through the first through hole 150.

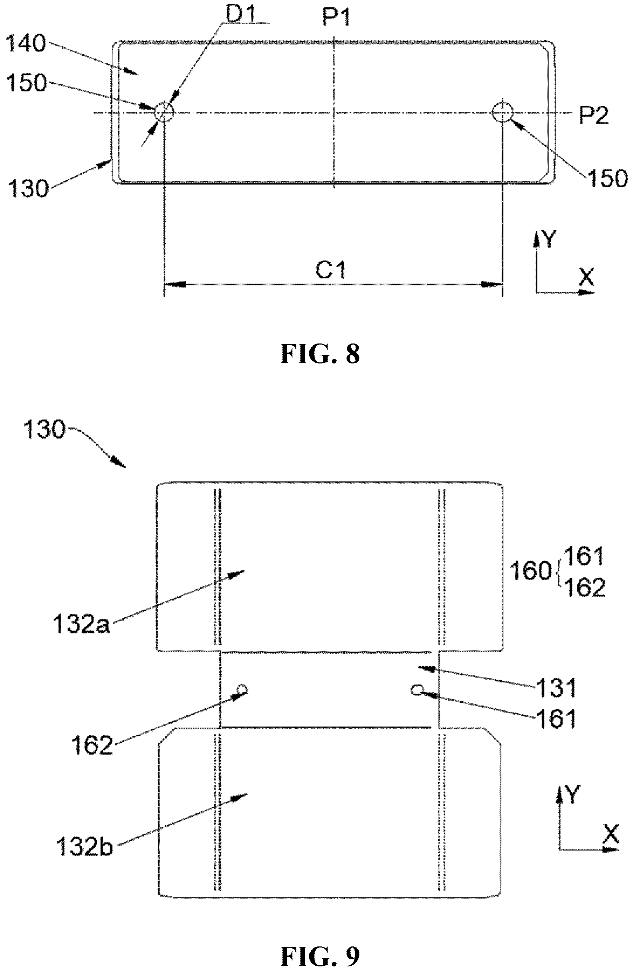

In some embodiments, as shown in FIG. 8, the separation structure 140 has a center line P1 in a length direction, the center line P1 is parallel to a width direction of the separation structure 140, and at least one first through hole 150 is provided on both sides of the center line P1. With such arrangement, for the separation structure 140, in the length direction, the separation structure 140 is divided into two regions with relatively close or equal areas. Both regions are provided with a first through hole 150, into which a positioning structure may be inserted for positioning in the positioning process. The positioning is more effective.

In some embodiments, as shown in FIG. 5, the insulating structure 130 includes an insulating film, the insulating film includes a first portion 131 and a second portion 132, the first portion 131 is located between the electrode assembly 120 and the first wall 111, the second portion 132 is connected to the first portion 131, and the second portion 132 is annular and encloses an outer periphery of the electrode assembly 120. When the electrode assembly 120 is cylindrical, the second portion 132 is in a circular ring shape. When the electrode assembly 120 is prismatic (e.g. in a cubic shape), the second portion is in a prismatic ring shape. As shown in FIG. 5, the electrode assembly 120 is of cuboid structure having four circumferential side faces. The second portion 132 is of square annular structure enclosed by the four side faces. The four side faces of the second portion 132 are, respectively, attached to four circumferential side faces of the electrode assembly 120.

Exemplarily, the electrode assembly 120 has two opposite ends, one end has a tab 122, and the other end faces the first wall 111. On the outer surface of the electrode assembly 120, one or more side faces connected between its two opposite ends enclose a peripheral face of the electrode assembly 120, that is, the circumferential side face of the electrode assembly 120. The second portion 132 encloses the circumferential side face of the electrode assembly 120. The second portion 132 encloses the outer periphery of the electrode assembly 120, including the second portion 132 completely covering the circumferential side face of the electrode assembly 120, and also including the second portion 132 covering a partial area of the circumferential side face of the electrode assembly 120.

Exemplarily, as shown in FIGS. 3 and 5, the second portion 132 of the insulating film coats at least a portion of the circumferential side face of the cell assembly, and the first portion 131 of the insulating film coats a side of the cell body 121 facing the first wall 111. When the insulating film may include a plurality of film layer structures, the different film layer structures coat different side faces of the cell body 121, and the insulating films attached to the adjacent side faces may have an overlapping region or have no overlapping region but be connected. The film layer of the insulating film located between the electrode assembly 120 and the first wall 111 is the first portion 131 and other film layer structures provided around the electrode assembly 120 constitute the second portion 132. The second portion 132 may be formed by one annular film layer structure, or by connecting a plurality of film layer structures. The first portion 131 and the second portion 132 may be separate structures and be connected in the fitting process, and alternatively, as shown in FIG. 9, the insulating film is a unitary film layer, that is, the first portion 131 and the second portion 12 are of integrated structure, which coats multiple side faces of the cell body 121 after being folded. The portion located between the cell body 121 and the first wall 111 is the first portion 131, and a portion enclosing and coating the outer periphery of the cell body 121 is the second portion 132. The dotted lines in FIG. 9 are folding marks, and for the structure formed after folding, reference may be made to the shape of the insulating structure 130 in FIGS. 3 and 5. In FIG. 9, the first portion 131 is rectangular, and opposite two sides of the first portion 131 are provided, respectively, a first subordinate film layer 132a and a second subordinate film layer 132b. After folding, two opposite sides of the first subordinate film layer 132a and the second subordinate film layer 132b are, respectively, connected such that the first subordinate film layer 132a and the second subordinate film layer 132b are connected to form a rectangular annular structure, that is, connected to form the second portion 132. The first subordinate film layer 132a and the second subordinate film layer 132b may be bonded.

In some embodiments, the cross-sectional area of at least one second through hole 160 is equal to that of the first through hole 150 corresponding thereto. The second through hole 160 having the equal cross-sectional area to the first through hole 150 may be an alignment hole 161 or a positioning hole 162.

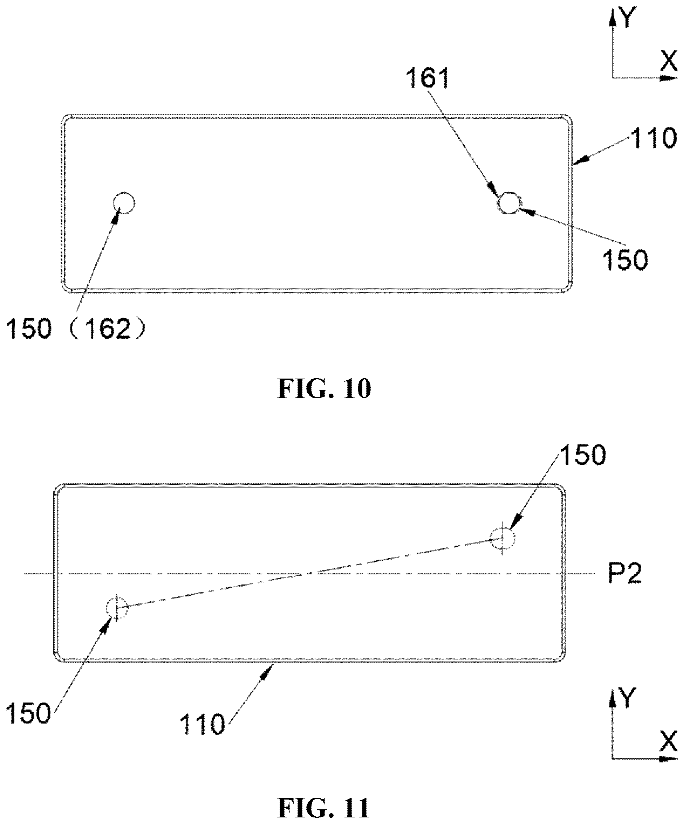

Exemplarily, as shown in FIG. 10, there are two through holes 150, and the two first through holes 150 have the same shape and the equal cross-sectional area. There are two second through holes 160, one of which is an alignment hole 161 and the other is a positioning hole 162. The cross-sectional area of the alignment hole 161 is greater than that of the first through hole 150, and the cross-sectional area of the positioning hole 162 is equal to that of the first through hole 150 (from the perspective of FIG. 10, the positioning hole 162 coincides with the first through hole 150), and the shape of the positioning hole 162 is the same as that of the first through hole 150. In this way of arrangement, the second through hole 160 having the same cross-sectional area as the first through hole 150 is the positioning hole 162. Since the cross-sectional area of the positioning hole 162 is equal to that of the first through hole 150, the positioning hole 162 may be used as a positioning reference hole. That is, in the positioning process, the positioning reference hole is first brought in complete correspondence to the first through hole 150, a positioning structure passed through the first through hole 150 is inserted into the corresponding positioning reference hole, and the insulating structure 130 and the separation structure 140 are relatively well positioned in directions parallel to the first wall 111 via the positioning structure inserted into the positioning hole 162 and the first through hole 150. Then, another positioning structure is passed through another first through hole 150 and then extends into the alignment hole 161, thereby preventing rotation the insulating structure 130 and the separation structure 140 about an axis of the first through hole 150 to a certain extent, and further achieving more effective positioning.

In another example, as shown in FIG. 4, there are two first through holes 150, and the two first through holes 150 are different in cross-sectional area. The first through hole 150 with less cross-sectional area is provided correspondingly to the positioning hole 162, and the positioning hole 162 has the same cross-sectional area as the corresponding first through hole 150. The first through hole 150 with greater cross-sectional area is provided correspondingly to the alignment hole 161, and the alignment hole 161 has the same cross-sectional area as the corresponding first through hole 150. In this way of arrangement, the alignment hole 161 and the positioning hole 162 are, respectively, equal to the corresponding first through holes 150 in cross-sectional area. The positioning structure inserted into the positioning hole 162 and the corresponding first through hole 150 plays a role of initial positioning for the insulating structure 130 and the separation structure 140, and the cross-sectional area of both the alignment hole 161 and the first through hole 150 corresponding thereto is greater than that of the positioning structure. Therefore, even if there is a great error in the distance between the alignment hole 161 and the positioning hole 162, or a great error occurs between the two first through holes 150, corresponding regions between the alignment hole 161 and the first through hole 150 corresponding thereto may still be enabled to be available for the insertion of the positioning structure.

In some examples, as shown in FIG. 4, the second through hole 160 includes at least one alignment hole 161 and one positioning hole 162, the cross-sectional area of the alignment hole 161 is greater than that of the positioning hole 162, the cross-sectional area of the positioning hole 162 is equal to that of the corresponding first through hole 150, and the positioning hole 162 is the same as the corresponding first through hole 150 in shape.

In such an example, there are a plurality of ways of provision. In one way of arrangement, the two first through holes 150 are the same in shape and cross-sectional area, the positioning hole 162 is the same as the first through hole 150 corresponding thereto in shape and cross-sectional area, and the cross-sectional area of the alignment hole 161 is greater than that of the first through hole 150 corresponding thereto. In another way of arrangement, the two first through holes 150 are different in cross-sectional area, and may be the same or different in shape. The first through hole 150 with less cross-sectional area is the same as the positioning hole 162 in cross-sectional area and shape, and the first through hole 150 with greater cross-sectional area is the same as the alignment hole 161 in cross-sectional area and shape. In yet another way of arrangement, the two first through holes 150 are different in cross-sectional area, and may be the same or different in shape. The first through hole 150 with less cross-sectional area is provided correspondingly to the positioning hole 162, and the positioning hole 162 is the same, in cross-sectional area and shape, as the first through hole 150 corresponding thereto. The first through hole 150 with greater cross-sectional area is provided correspondingly to the alignment hole 161, and the cross-sectional area of the alignment hole 161 is greater than that of the first through hole 150 with greater cross-sectional area.

In this way of arrangement, the positioning hole 162 plays a role of reference positioning, that is, in the positioning process, the positioning structure is first inserted into the first through hole 150 corresponding to the positioning hole 162, and then into the positioning hole 162. Since the positioning hole 162 is equal to, in cross-sectional, and the same as, in shape, the first through hole 150, with the positioning structure dimensionally matching the first through hole 150, the positioning structure dimensionally matches the positioning hole 162, that is, the separation structure 140 plays a good limiting role for the positioning structure through the first through hole 150, and the insulating structure 130 plays a good limiting role for the positioning structure through the positioning hole 162.

In some embodiments, the cross-sectional area of the first through hole 150 corresponding to the alignment hole 161 is equal to that of the alignment hole 161, and the first through hole 150 corresponding to the alignment hole 161 is the same as the alignment hole 161 in shape.

In such an example, the cross-sectional area of the alignment hole 161 is greater than that of the positioning hole 162, while the alignment hole 161 is the same as, in shape, and equal to, in cross-sectional area, the first through hole 150 corresponding thereto, and the positioning hole 162 is the same as, in shape, and equal to, in cross-sectional area, the other first through hole 150. Therefore, the two first through holes 150 are different in cross-sectional area, and the cross-sectional area of one first through hole 150 is greater than that of the other first through hole 150.

Since one first through hole 150 is the same as, in cross-sectional area and shape, the positioning hole 162, this first through hole 150 and the positioning hole 162 may be perforated using a same perforating device or a same perforating process. Since another first through hole 150 is the same as, in cross-sectional area and shape, the alignment hole 161, this first through hole 150 and the alignment hole 161 may be perforated using a same perforating device or a same perforating process. This facilitates production and manufacturing and improves production and manufacturing efficiency.

The cross-sectional shape of the first through hole 150 provided in this embodiment may be circular, elliptical, polygonal, trapezoidal, or in other shapes. In some embodiments, the cross-sectional shape of the first through hole 150 matches that of the positioning structure. For example, if the cross-sectional shape of the positioning structure is circular, the first through hole 150 is a round hole; if the cross-sectional shape of the positioning structure is rectangular, the first through hole 150 is a square hole, and the cross-sectional shape of the square hole is a rectangle that matches the cross-sectional shape of the positioning structure.

In some embodiments, as shown in FIGS. 4, 6, and 10, at least one second through hole 160 and the first through hole 150 provided correspondingly thereto are both round holes, and the two round holes are equal in diameter.

In order to position the insulating structure 130 and the separation structure 140 in such battery cell 100, a cylindrical positioning structure may be used. The cylindrical positioning structure includes a positioning structure that is cylindrical as a whole, or a positioning structure with a truncated cone shaped or conical end. The first through hole 150 and the second through hole 160 are both provided as round holes. On the one hand, since the positioning structure is usually cylindrical, it is convenient to use a universal positioning structure for positioning without separately designing a mold to produce a special positioning structure, thereby saving costs; on the other hand, the production and processing technique for the round holes is more mature, and the production and manufacturing efficiency is higher; on another hand, when the positioning structure is inserted into the round hole, an inner wall of the round hole encloses the circumference of the positioning structure, which can provide relatively better limiting for the positioning structure in any circumferential direction.

Exemplarily, there are two first through holes 150, both first through holes 150 are round holes, and the two round holes are not equal in diameter. There are two second through holes 160, including one positioning hole 162 and one alignment hole 161. The positioning hole 162 and the alignment hole 161 are both round holes. The positioning hole 162 is equal to, in diameter, the first through hole 150 with a smaller diameter and provided correspondingly thereto. The alignment hole 161 is equal to, in diameter, the first through hole 150 with a larger diameter and is provided correspondingly thereto. That is, the diameters of the both second through holes 160 are equal to those of the corresponding first through holes 150. Upon positioning the insulating structure 130 and the separation structure 140 of such battery cell 100, the outer diameter of the positioning structure used matches the diameter of the first through hole 150 with the smaller diameter, that is, the outer diameter of the positioning structure is less than the diameters of the other first through hole 150 and the alignment hole 161, such that after the positioning hole 162 is fully aligned with the first through hole 150 with the smaller diameter, a region of the alignment hole 161 corresponding to the first through hole 150 may still be enabled to be available for insertion of the positioning structure even if the other first through hole 150 and the alignment hole 161 are misaligned within a certain range in any direction parallel to the first wall 111.

In another example, there are two first through holes 150, both first through holes 150 are round holes and equal in diameter. There are two second through holes 160, including one positioning hole 162 and one alignment hole 161. The positioning hole 162 and the alignment hole 161 are both round holes. The diameter of the positioning hole 162 is equal to that of the first through hole 150. The diameter of the alignment hole 161 is greater than that of the first through hole 150. That is, of the two second through holes 160, the diameter of one second through hole 160 (the positioning hole 162) is equal to that of the first through hole 150 and is a round hole.

In yet another example, as shown in FIG. 4, there are two first through holes 150. Of the two first through holes 150, one first through hole 150 is a round hole, and the other first through hole 150 is a non-round hole and is greater than the round hole in cross-sectional area. There are two second through holes 160, including one positioning hole 162 and one alignment hole 161. The positioning hole 162 is a round hole. The diameter of the positioning hole 162 is equal to that of the first through hole 150. The alignment hole 161 is the same as, in shape, the first through hole 150 that is the non-round hole, and the cross-sectional area of the alignment hole 161 is equal to that of the first through hole 150 that is the non-round hole. That is, of the two second through holes 160, the diameter of one second through hole 160 (the positioning hole 162) is equal to that of the first through hole 150 and is a round hole.

The diameter of the round hole may be designed according to the diameter of the positioning structure, or may be designed according to the dimension of the first wall 111, the dimension of the first wall 111 including a length of the first wall 111 and a width of the first wall 111. If the dimension of the first wall 111 is relatively large, a relatively large round hole may be provided to increase the area of contact between the round hole and the positioning structure, improving the positioning stability.

Exemplarily, the length L of the first wall 111 is 5 millimeters (mm) to 1000 mm, and the width W1 is 5 mm to 1000 mm. In some embodiments, the diameter D1 of the round hole is 1 mm to 20 mm. Exemplarily, the diameter D1 of the round hole may be 1 mm, 2 mm, 3 mm, 5 mm, 6 mm, 8 mm, 12 mm, 15 mm, 17 mm, or 18 mm. It is worth noting that the diameter D1 of the round hole is less than the length of the first wall 111, and less than the width of the first wall 111. Within this range, the insulating structure 130 and the separation structure 140 are positioned through the fitting between the round hole and the positioning structure, and the inner wall of the round hole is contacted with an outer wall of the positioning structure. Therefore, the insulating structure 130, the separation structure 140, and the positioning structure are relatively limited through the fitting between the round hole and the positioning structure, and the positioning is more effective.

In some examples, the diameter D1 of the round hole is 2.5 mm-7 mm. Exemplarily, the diameter D1 of the round hole may be 2.5 mm, 2.8 mm, 3 mm, 3.2 mm, 4 mm, 4.5 mm, 5 mm, 6 mm, 6.5 mm, 6.8 mm, or 7 mm. Within this range, the region of contact between the inner wall of the round hole and the outer wall of the positioning structure may be relatively larger, the positioning stability is relatively better, and the round hole of this dimension facilitates insertion of the positioning structure and performing of positioning operations, improving positioning efficiency.

In some embodiments, the first wall 111 is a bottom wall of the case, and the length direction of the first wall 111 is the X direction, and the width direction is the Y direction.

The dimension of the alignment hole 161 in at least one direction parallel to the first wall 111 may be greater than that of the first through hole 150 or greater than that of other second through holes 160. Exemplarily, as shown in FIG. 6, in some implementations, in a first direction, the dimension of the alignment hole 161 is greater than that of the first through hole 150 corresponding thereto, or the dimension of the alignment hole 161 is greater than that of other second through holes 160, the first direction being parallel to the length direction of the first wall 111, that is, the first direction being the X direction. With such arrangement, in the alignment process, the dimension of the alignment hole 161 in the first direction is larger, that is, the dimension in the X direction is relatively larger, such that a deviation in certain range may occur between the alignment hole 161 and the corresponding first through hole 150 in the first direction, and the positioning structure may still be enabled for insertion into the first through hole 150 and the corresponding alignment hole 161 corresponding thereto. Since in the actual production and manufacturing process, the case where the manufacturing error occurring in the first direction makes it difficult to insert the positioning structure arises more often, the dimension of the alignment hole 161 in the first direction is made larger, which may solve the alignment difficulty problem to a certain extent.

In this embodiment, the plurality of first through holes 150 are provided in spaced manner in any direction parallel to the first wall 111. Exemplarily, as shown in FIG. 11, there are two first through holes 150, and a connecting line between center points of the two first through holes 150 is provided in inclination relative to a center line P2 of the first wall 111 in the width direction. That is, taking the example that the first wall 111 is rectangular, including two oppositely provided long sides and two oppositely provided short sides, one first through hole 150 is provided close to one long side, while the other first through hole 150 is provided close to the other long side, such that the connecting line between the center points of the two first through holes 150 is provided in inclination relative to the center line of the first wall 111 in the width direction. The first through hole 150 is provided close to one long side, which means that in the width direction (Y direction) of the first wall 111, a distance between the first through hole 150 and one long side is less than that between the first through hole 150 and the other long side.

In some examples, as shown in FIG. 8, multiple first through holes 150 are provided in spaced manner in the first direction. In this way of arrangement, multiple first through holes 150 are provided in spaced manner in the length direction of the first wall 111, and the connecting line between the center points of two first through holes 150 is provided relatively parallel to the center line P2 of the first wall 111 in the width direction, such that in the positioning process, multiple positioning structures are inserted between the insulating structure 130 and the separation structure 140 in spaced manner in the length direction of the first wall 111, thereby achieving more effective positioning for the insulating structure 130 and the separation structure 140 in the first direction. Since the dimensions of the insulating structure 130 and the separation structure 140 in the first direction are greater than those in the second direction, the positioning is relatively more effective. As the first direction is the length direction of the first wall 111, which is the same as a length direction of this side wall of the insulating structure 130 and a length direction of the separation structure 140, after the multiple positioning structures are inserted between the insulating structure 130 and the separation structure 140, connecting lines between the multiple positioning structures are parallel to long side edges of the insulating structure 130 and long side edges of the separation structure 140, facilitating operation in the positioning process.

In some embodiments, as shown in FIG. 8, there are two first through holes 150, and the two first through holes 150 are separately located in the separation structure 140. The separation structure 140 has a center line P1 in the length direction, and this center line P1 is parallel to the width direction of the separation structure 140. The two first through holes 150 are, respectively, located on two sides of the center line of the separation structure 140 in the length direction, and the two first through holes 150 are distributed in spaced manner along the first direction. With such arrangement, for the separation structure 140, in the length direction, the separation structure 140 is divided into two regions with relatively close or equal areas. Both regions are provided with a first through hole 150, into which a positioning structure may be inserted for positioning in the positioning process. The positioning is more effective.

In some examples, as shown in FIG. 10, in a second direction, the dimension of the first through hole 150 is equal to that of the second through hole 160 corresponding thereto, the second direction being parallel to the width direction of the first wall 111. That is, in the Y direction, the dimension of the first through hole 150 is equal to that of the second through hole 160 corresponding thereto. Since the dimension of the alignment hole 161 is relatively larger in the X direction, while the dimension of the alignment hole 161 is equal to that of the first through hole 150 in the Y direction, the alignment hole 161 has a better limiting effect on the positioning structure in the Y direction, and in the X direction, the positioning structure may be enabled for insertion even when there is an error. In this way of arrangement, through the fitting among the first through hole 150 , the second through hole 160, and the positioning structure, the positioning of the insulating structure 130 and the separation structure 140 in the Y direction is more effective and the positioning stability is better.

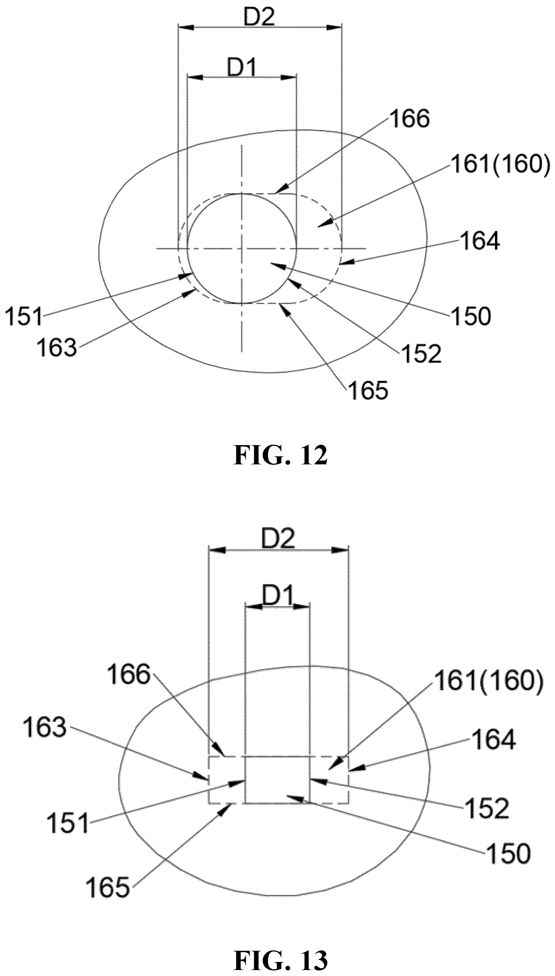

In some examples, as shown in FIGS 12 to 14, the first through hole 150 has a first inner wall 151 and a second inner wall 152 distributed along the first direction, the alignment hole 161 has a third inner wall 163 and a fourth inner wall 164 distributed along the first direction, as well as a fifth inner wall 165 and a sixth inner wall 166 distributed along the second direction, the first inner wall 151 has the same shape as the third inner wall 163, the second inner wall 152 has the same shape as the third inner wall 163, and the fifth inner wall 165 and the sixth inner wall 166 are each parallel to the first direction. In this way of arrangement, the positioning structure that can extend into the first through hole 150 may move, within the alignment hole 161, along the first direction within a dimensional range of the dimensionally shorter one of the fifth inner wall 165 and the sixth inner wall 166, that is, in the first direction, where a manufacturing offset of the first through hole 150 or the second through hole 160 is within the dimensional range of the dimensionally shorter one of the fifth inner wall 165 and the sixth inner wall 166, the positioning structure can be inserted into the second through hole 160. Since the first inner wall 151 and the third inner wall 163 are the same in shape, and the second inner wall 152 and the fourth inner wall 164 are the same in shape, the positioning structure may be enabled to have a larger region of contact with the third inner wall 163 and the fourth inner wall 164, achieving more effective positioning and more effectively utilizing the inner wall of the alignment hole 161 to limit the positioning structure.

Exemplarily, as shown in FIG. 12, where at least one first through hole 150 is a round hole, the alignment hole 161 is a runway hole, and the first inner wall 151 and the second inner wall 152 of the first through hole 150 that is the round hole are both semicircular, that is, the first inner wall 151 and the second inner wall 152 are both arc-shaped inner walls. The runway hole is a hole with the third inner wall 163 and the fourth inner wall 164 being both arc faces, while the fifth inner wall 165 and the sixth inner wall 166 being both flat faces. The first inner wall 151 and the third inner wall 163 are the same in shape and equal in dimension, that is, the third inner wall 163 is also an arc hole, and the diameter of the first inner wall 151 is equal to that of the third inner wall 163; the second inner wall 152 and the fourth inner wall 164 are the same in shape and equal in dimension, that is, the fourth inner wall 164 is also an arc hole, and the diameter of the second inner wall 152 is equal to that of the fourth inner wall 164. The fifth inner wall 165 and the sixth inner wall 166 are relatively parallel, and in the first direction, the fifth inner wall 165 and the sixth inner wall 166 have are equal in length. With such arrangement, a positioning pin may be of cylindrical structure. The dimension of the positioning structure matches that of the first through hole 150 that is the round hole. This positioning structure may extend into the runway hole and may move within the runway hole along the first direction. That is, in the first direction, where a manufacturing offset of the first through hole 150 or the second through hole 160 is within a dimensional range of the fifth inner wall 165, the positioning structure can be inserted into the second through hole 160.

In another example, as shown in FIG. 13, at least one first through hole 150 is a rectangular hole, the alignment hole 161 is a rectangular hole, the first inner wall 151 is parallel to the third inner wall 163, and the second inner wall 152 is parallel to the fourth inner wall 164. Exemplarily, in the first direction, the dimension of the alignment hole 161 is greater than the that of the rectangular hole among the first through holes 150, and in the second direction, the dimension of the alignment hole 161 is equal to that of the first through hole 150. As shown in FIG. 13, in the first direction, the dimension of the first through hole 150 is D1, and the dimension of the alignment hole 161 is D2. A preset position of the first through hole 150 is that a center of the first through hole 150 coincides with that of the second through hole 160, that is, in the first direction, distances of the two sides of the first through hole 150 to the second through hole 160 are equal. Then with a manufacturing error of the first through hole 150 being in the range of (D2-D1)/2, the first through hole 150 is still provided correspondingly to a partial region of the second through hole 160, such that the positioning structure passed through the first through hole 150 can pass through the second through hole 160. This way of arrangement is suitable for positioning via a positioning structure with the rectangular cross-section.

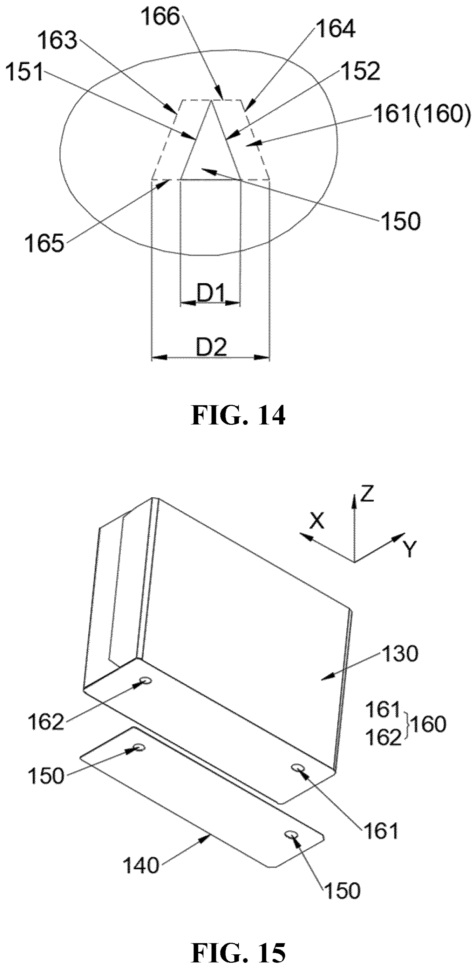

In yet another example, as shown in FIG. 14, at least one first through hole 150 is a triangular hole, the alignment hole 161 is a trapezoidal hole, the first inner wall 151 is parallel to the third inner wall 163, and the second inner wall 152 is parallel to the fourth inner wall 164. As shown in FIG. 14, in the first direction, the dimension of a largest side length of the first through hole 150 is D1, and the dimension of a largest side length of the alignment hole 161 is D2. If a preset position of the first through hole 150 is that a center of the first through hole 150 coincides with that of the second through hole 160, that is, in the first direction, distances of the two sides of the first through hole 150 to the second through hole 160 are equal, then, with a manufacturing error of the first through hole 150 being in the range of (D2-D1)/2, the first through hole 150 is still provided correspondingly to a partial region of the second through hole 160, such that the positioning structure passed through the first through hole 150 can pass through the second through hole 160. This way of arrangement is suitable for positioning via a positioning structure with the triangular cross-section.

In this way of arrangement, for positioning structures of different shapes, first through holes 150 of different shapes may be selected, and second through holes 160 of different shapes may be selected, improving relative limiting among the first through holes 150, the second through holes 160, and the positioning structures.

In some embodiments, in the first direction, a difference between the dimension of the alignment hole 161 and the dimension of the corresponding first through hole 150 is in a range of greater than 0 mm and less than or equal to 3 mm; alternatively, in the first direction, a difference between the dimension of the alignment hole 161 and the dimension of the other second through hole 160 is in a range of greater than 0 mm and less than or equal to 3 mm.

In one way of arrangement, in the first direction, the dimension of the alignment hole 161 is greater than that of the first through hole 150. In this way of arrangement, a difference between the dimension of the alignment hole 161 and the dimension of the corresponding first through hole 150 is in a range of greater than 0 mm and less than or equal to 3 mm. As shown in FIGS. 12 to 14, the dimension of the alignment hole 161 is greater than that of the first through hole 150. The dimension of the alignment hole 161 is D2, and the dimension of the first through hole 150 is D1, with 0 mm<D2-D1≤3 mm. In this way of arrangement, a maximum deviation of the first through hole 150 in the first direction is 3 mm. The positioning structure may pass through the first through hole 150 and then through the alignment hole 161 corresponding to this first through hole 150.

In this way of arrangement, since a dimensional difference between the alignment hole 161 and the first through hole 150 corresponding thereto is in the range of 3 mm, the dimensional difference between the alignment hole 161 and the positioning structure is relatively small, which enables the alignment hole 161 and the first through hole 150 corresponding thereto to have a better limiting effect on the positioning structure, allowing for improved positioning of the insulating structure 130 and the separation structure 140 in the first direction.

In some embodiments, in the first direction, the difference between the dimension of the alignment hole 161 and the dimension of the first through hole 150 is in a range of greater than or equal to 0 mm and less than or equal to 0.5 mm; alternatively, in the first direction, the difference between the dimension of the alignment hole 161 and the dimension of the other second through hole 160 is in a range of greater than or equal to 0 mm and less than or equal to 0.5 mm. As shown in FIGS. 12 to 14, the dimension of the alignment hole 161 is greater than that of the first through hole 150. The dimension of the alignment hole 161 is D2, and the dimension of the first through hole 150 is D1, with 0 mm<D2-D1≤0.5 mm. In this way of arrangement, a maximum deviation of the first through hole 150 in the first direction is 0.5 mm. The positioning structure may pass through the first through hole 150 and then through the alignment hole 161 corresponding to this first through hole 150. Since perforating devices all have a certain precision, a deviation of perforating is usually not too large. Therefore, the dimensions of the alignment hole 161 and the first through hole 150 may be set according to a precision standard for the perforating devices. In this example, the difference between the dimension of the alignment hole 161 and the dimension of the other second through hole 160 is relatively small, that is, the dimensional minimum for the alignment hole 161 is set in accordance with the precision standard for the perforating devices, such that the dimension of the alignment hole 161 is relatively smaller while meeting the alignment requirements, reducing the amount of anode powder entering the alignment hole 161.

In some embodiments, as shown in FIGS. 8, 15, 16, and 17, in the second direction (Y direction), the first through hole 150 is located in a middle region of the insulating structure 130 or the separation structure 140, the second direction being parallel to the width direction of the first wall 111.

Since the second through hole 160 is provided correspondingly to the first through hole 150, the second through hole 160 is also provided in the middle region of the insulating structure 130 or the separation structure 140. Taking the example that the insulating structure 130 is provided with the second through hole 160 and the separation structure 140 is provided with the first through hole 150, in the second direction, the first through hole 150 is provided in the middle region of the separation structure 140, and the second through hole 160 is provided in the middle region of the insulating structure 130.

The separation structure 140 has two lateral edges distributed in spaced manner in the second direction, and the first through hole 150 is provided in the middle region of the separation structure 140, that is, there are spacings between the first through hole 150 and both lateral edges of the separation structure 140, and spacing distances are similar or equal.

The insulating structure 130 has two lateral edges distributed in spaced manner in the second direction, and the second through hole 160 is provided in the middle region of the insulating structure 130, that is, there are spacings between the second hole 160 and both lateral edges of the insulating structure 130, and spacing distances are similar or equal.

After the positioning structure is inserted into the separation structure 140 and the insulating structure 130, the distances between the positioning structure and the two lateral edges of the separation structure 140 distributed in spaced manner in the second direction are similar, and the distances between the positioning structure and the two lateral edges of the separation structure 140 distributed in spaced manner in the second direction are similar, and as such, relative swing between the separation structure 140 and the insulating structure 130 may be reduced, improving the positioning effect.

That is, in this way of arrangement, after the positioning structure is inserted, the positioning structure is located in the middle region of the insulating structure 130 and the separation structure 140, such that the positioning is more effective.

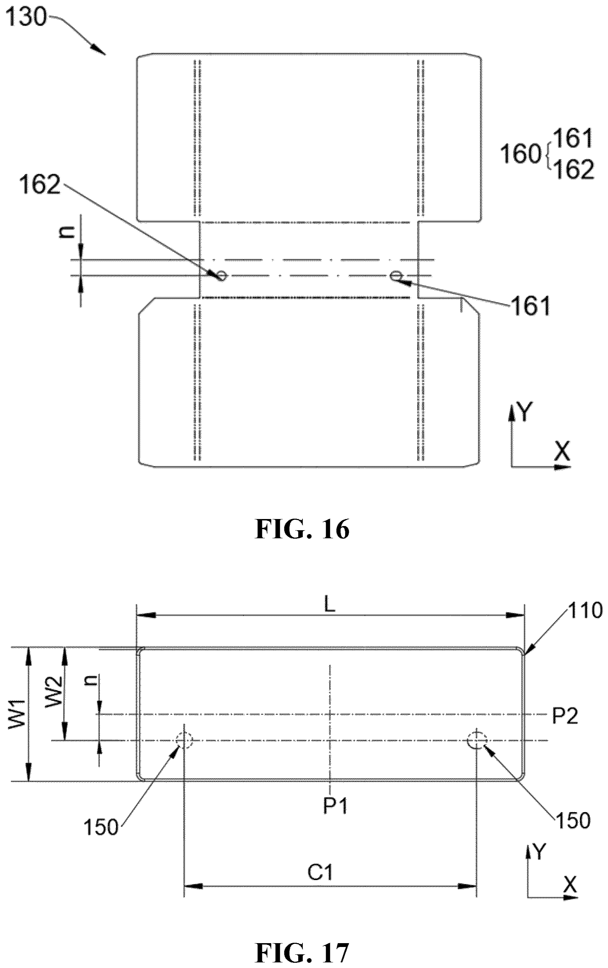

In some embodiments, as shown in FIG. 17, in the second direction, the dimension of the first wall 111 is W1, a distance between the first through hole 150 and a side wall of the shell 110 is W2, and then:

$$|W2 - W1/2| \leq 5 \text{ mm}.$$

In FIG. 17, |W2 - W1/2| = n, and 0 mm≤n≤5 mm. Exemplarily, n maybe 0 mm, 1 mm, 1.5 mm, 2 mm, 2.5 mm, 3 mm, 4 mm or 5 mm. The distance between the first through hole 150 and the side wall of the shell 110 is specifically a distance between a midpoint of the first through hole 150 in the second direction and the side wall of the shell 110. When the first through hole 150 is a round hole, this distance is a distance between a center of circle of the first through hole 150 and the side wall of the shell 110. 0 mm≤n≤5 mm, which means that the distance between the first through hole 150 and the center line P2 of the first wall 111 in the second direction is in a range of not greater than 5 mm, that is, the first through hole 150 is enabled to be closer to the position of the center line P2 of the first wall 111 in the second direction. In this way of arrangement, the first through hole 150 is closer to the center line P2, and the second through hole 160 is provided correspondingly to the first through hole 150, such that the second through hole 160 is also provided closer to the center line P2, and the distance between the midpoint of the second through hole 160 and the center line P2 of the first wall 111 in the second direction is in the range of not greater than 5 mm. After the positioning structure is inserted, a difference between the distances between the positioning structure and the two lateral edges of the separation structure 140 distributed in spaced manner in the second direction is less than 5 mm, and a difference between the distances between the positioning structure and the two lateral edges of the separation structure 140 distributed in spaced manner in the second direction is less than 5 mm, and as such, relative swing between the separation structure 140 and the insulating structure 130 may be reduced, improving the positioning effect. That is, in this way of arrangement, after the positioning structure is inserted, the positioning structure is located in the middle of the insulating structure 130 and the separation structure 140, such that the positioning is more effective.

As shown in FIG. 8, in the second direction, distances between the first through hole 150 and side walls, on both sides, of the shell 110 are equal. The outer side has two side walls provided in spaced manner in the second direction, and the distance between the first through hole 150 and one of the side walls is equal to that between the first through hole 150 and the other side wall. That is, the center of the first through hole 150 is located on the center line P2 of the first wall 111 in the second direction.

Since the second through hole 160 is provided correspondingly to the first through hole 150 the center of the second through hole 160 is also located on the center line P2 of the first wall 111 in the second direction.

In this way of arrangement, after the positioning structure is inserted, a central axis of the positioning structure is located on the center line P2 of the insulating structure 130 and the separation structure 140 in the second direction, such that the positioning is more effective and relative torsion between the insulating structure 130 and the separation structure 140 may be further reduced.

In some embodiments, as shown in FIG. 8, the multiple first through holes 150 are symmetrically distributed in pairs relative to the center line P1 of the first wall 111 in the length direction, a center distance of two symmetrical first through holes 150 is C1, a length of the first wall 111 is L, and then C1 = (L - 10 mm, L - 60 mm), the first direction being parallel to the length direction of the first wall 111.

The center of the first through hole 150 is a point that is equidistant from two sides of the first through hole 150 in the first direction. Exemplarily, if the first through hole 150 is a round hole, the center of the first through hole 150 is the center of circle of the first through hole 150. If the first through hole 150 is a rectangular hole, the center of the first through hole 150 is an intersection of two diagonals of the first through hole 150. In the two symmetrically distributed first through holes 150, a distance between the centers of the two first through holes 150 is a center distance C1 of the two first through holes 150.

C1 = (L - 10 mm, L - 60 mm), that is, C1 is less than L, and 10 mm<L - C1 <60 mm, and then a distance between the center of the first through hole 150 and the side wall of the shell 110 adjacent to the first through hole 150 is greater than 5 mm and less than 30 mm.

In this way of arrangement, there are certain distances between the first through hole 150 and the two side walls of the shell 110 provided in spaced manner along the first direction, and the distance between the first through hole 150 and the adjacent side wall is greater than 5 mm and less than 30 mm. The dimensions of the insulating structure 130 and the separation structure 140 in the first direction are similar to those of the first wall 111 in the first direction, such that in the insulating structure 130 and/or the separation structure 140 in which the first through hole 150 is provided, the structural strength of a region between the first through hole 150 and the side wall of the shell 110 is relatively greater.

In some embodiments, the separation structure 140 is provided between the insulating structure 130 and the first wall 111, the first through hole 150 is provided in the separation structure 140, and the second through hole 160 is provided in the insulating structure 130.

At least a portion of the insulating structure 130 is located between the electrode assembly 120 and the separation structure 140. The separation structure 140 is located between the cell assembly and the first wall 111, and between the insulating structure 130 and the first wall 111. The first through hole 150 is provided in the separation structure 140, and the second through hole 160 is provided in the insulating structure 130. That is, in the process of positioning of the insulating structure 130 and the separation structure 140, the positioning structure is first passed through the first through hole 150 in the separation structure 140, and then through the second through hole 160 in the insulating structure 130.

In this way of arrangement, the insulating structure 130 is provided closer to the electrode assembly 120, and the separation structure 140 is located between the insulating structure 130 and the first wall 111, facilitating production and processing. Exemplarily, the insulating structure 130 includes an insulating film, the insulating film encloses a coating cavity, and the cell assembly is at least partially located in the coating cavity, that is, the insulating film coats at least a partial region on the outside of the cell assembly. The separation structure 140 is located on the outside of the coating cavity of the insulating structure 130, such that the positioning structure is first passed through the separation structure 140 and then through the insulating structure 130. Positioning of the insulating film and the separation structure 140 may be achieved with a short length by which the positioning structure extends to a side of the insulating film facing away from the separation structure 140, or without the positioning structure extending to the side of the insulating film facing away from the separation structure 140, so operation is facilitated.

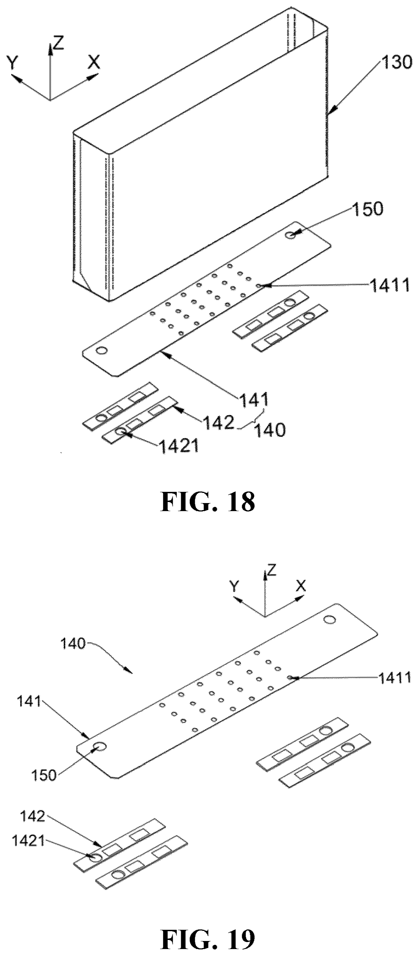

In some embodiments, as shown in FIG. 18, the separation structure 140 includes a plate body 141, the plate body 141 includes a first surface provided perpendicular to a thickness direction of the plate body 141, the first through hole 150 is provided in the plate body 141 in run-through manner along the thickness direction of the plate body 141, the first surface is provided with a support block 142, and the support block 142 is provided in a region of the first surface where no first through hole 150 is provided.

Since the first surface is perpendicular to the thickness direction of the plate body 141, the first surface is located on a side of the plate body 141 facing the first wall 111, or a side of the plate body 141 facing away from the first wall 111.

The support block 142 is provided to improve structural strength of the plate body 141. Since the support block 142 is provided in the region of the first surface where no first through hole 150 is provided, the support block 142 will not block the first through hole 150, that is, the support block 142 is provided to not affect the positioning between the plate body 141 and the insulating structure 130.

As shown in FIGS. 18, 19, and 20, in some other embodiments, the separation structure 140 includes a plate body 141 and a support block 142, the plate body 141 includes a first surface provided along a thickness direction of the plate body 141, the first through hole 150 is provided in the plate body 141 in run-through manner along the thickness direction of the plate body 141, the first surface is provided with the support block 142, the support block 142 is provided with a third through hole 1421 along a thickness direction of the support block 142, the third through hole 1421 is provided correspondingly to the first through hole 150, and the third through hole 1421 is communicated with the first through hole 150.

The support block 142 is provided with a third through hole 1421 in run-through manner along the Z direction, and the third through hole 1421 can be communicated with the first through hole 150. That is, where the support block 142 is mounted in a region of the plate body 141 where the first through hole 150 is provided, the third through hole 1421 in the support block 142 is communicated with the first through hole 150 to allow the positioning structure to pass through.

In this way of arrangement, the third through hole 1421 is provided for the positioning structure to pass through. On the one hand, since the support block 142 is provided with the third through hole 1421, the positioning structure may be passed through the third through hole 1421 and then extended into the first through hole 150, that is, the support block 142 does not block the first through hole 150, such that the insulating structure 130 and the separation structure 140 may still be positioned via the positioning structure. On the other hand, since the positioning structure is passed through the third through hole 1421 and then extended into the first through hole 150, the plate body 141 and the support block 142 may be positioned via the positioning structure.

In some embodiments, the cross-sectional area of the third through hole 1421 is greater than or equal to that of the first through hole 150. Since the cross-sectional area of the third through hole 1421 is greater than or equal to that of the first through hole 150, while the positioning structure may be passed through the first through hole 150, when the third through hole 1421 is provided correspondingly to and communicated with the first through hole 150, the positioning structure may be passed through the third through hole 1421 and then extended into the first through hole 150, that is, the third through hole 1421 does not block the first through hole 150, facilitating passage of the positioning structure.

In some embodiments, there are multiple support blocks 142, the multiple support blocks 142 are each provided with a third through hole 1421, the multiple third through holes 1421 are the same in shape, and the multiple third through holes 1421 are the same in dimension.

When the quantity of the support blocks 142 is equal to that of the first through holes 150, one support block 142 may be provided to correspond to one first through hole 150, the first through hole 150 corresponding to and communicating with the third through hole 1421 in the correspondingly provided support block 142. Alternatively, part of the first through holes 150 are correspondingly provided with a support block 142, while another part of the first through holes 150 are not correspondingly provided with a support block 142, and other support blocks 142 are provided in the region of the plate body 141 where no first through hole 150 is provided.

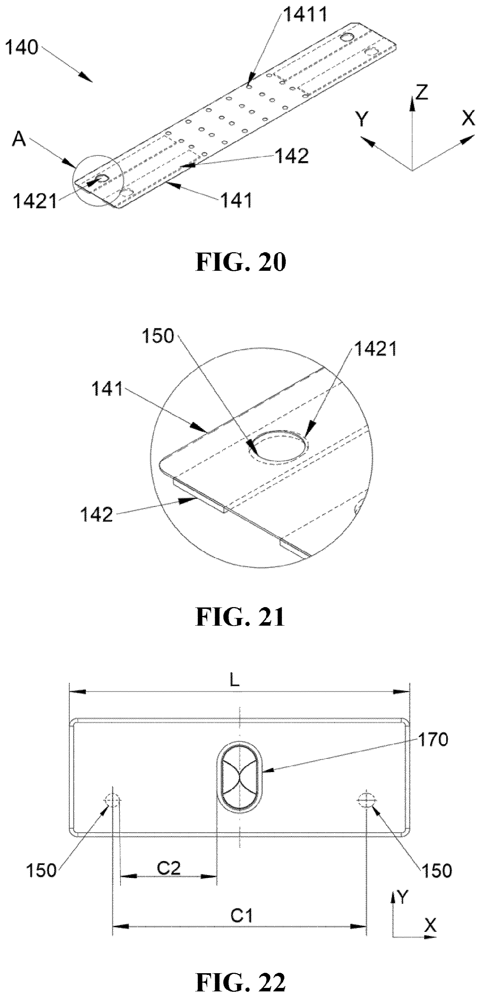

When the quantity of the support blocks 142 is greater than that of the first through holes 150, several support blocks 142 may be provided in the region of the plate body 141 where the first through hole 150 is provided, while further several support blocks 142 may be provided in the region of the plate body 141 where no first through hole 150 is provided. Exemplarily, as shown in FIG. 19, the plate body 141 is provided with two first through holes 150, and there are four support blocks 142, as shown in FIG. 20, in which the two support blocks 142 are, respectively, provided correspondingly to the two first through holes 150, such that the third through hole 1421 in the support block 142 corresponds to the first through hole 150. The other two support blocks 142 are provided in the region of the plate body 141 where no first through hole 150 is provided. The third through holes 1421 in the two support blocks 142 are not provided correspondingly to the first through holes 150. In this way of arrangement, the multiple support blocks 142 are the same in structure, allowing convenience for producing and manufacturing on a same production line. That is, the support block 142 with the same structure produced with the same production flow may be mounted both in a region corresponding to the first through hole 150 and in the region of the plate body 141 where no first through hole 150 is provided.

In some embodiments, the cross-sectional area of each third through hole 1421 is equal to that of the alignment hole 161. The cross-sectional area of the alignment hole 161 is relatively the largest among the first through hole 150 and the second through hole 160, that is, the cross-sectional area of the alignment hole 161 is greater than or equal to that of the first through hole 150, and the cross-sectional area of the alignment hole 161 is greater than that of the non-alignment hole 161 among the second through holes 160, such that the cross-sectional area of the third through hole 1421 is equal to that of the alignment hole 161. Therefore, the cross-sectional area of the third through hole 1421 is equal to that of the alignment hole 161, that is, the third through hole 1421 neither block the first through hole 150 or the second through hole 160, that is, whether the plate body 141 is provided with the first through hole 150 or the second through hole 160, it is possible that after the support block 142 is mounted to the plate body 141, the third through hole 1421 is brought in correspondence to the first through hole 150 or the second through hole 160 in the plate body 141, while the third through hole 1421 does not block the first through hole 150 or the second through hole 160.

In some embodiments, as shown in FIGS 20 and 21, at least one lateral edge of the support block 142 is provided flush with at least one lateral edge of the plate body 141. Exemplarily, as shown in FIG. 20, the plate body 141 has two lateral edges provided in spaced manner in the X direction, referred to as short sides of the plate body 141, and the support block 142 has two lateral edges provided in spaced manner in the X direction, referred to as short sides of the support block 142, and the short side, on one side, of the support block 142 is provided flush with the short side, on one side, of the plate body 141. Being provided flush means that in a plane constructed with the X direction and the Y direction, or in a plane parallel to the first wall 111, one lateral edge of the support block 142 and one lateral edge of the plate body 141 at least partially coincide. In other embodiments, the long sides of the support block 142 may be provided flush with the long sides of the plate body 141. The long sides of the support block 142 are the two lateral edges of the support block 142 provided in spaced manner in the Y direction, and the long sides of the plate body 141 are the two lateral edges of the plate body 141 provided in spaced manner in the Y direction. In this way of arrangement, the support block 142 and the plate body 141 may be positioned via the edges. Exemplarily, in the process of positioning the support block 142 and the plate body 141, a limiting structure is provided, this limiting structure has a limiting face, and the limiting face is parallel to one lateral edge of the plate body 141. One lateral edge of the plate body 141 is moved to contact the limiting face, and then one lateral edge of the support block 142 is moved to contact the limiting face, such that one lateral edge of the support block 142 is flush with one lateral edge of the plate body 141, thereby facilitating positioning of the plate body 141 and the support block 142, so as to facilitate the connection of the plate body 141 with the support block 142. The plate body 141 and the support block 142 may be connected by hot melting. In some embodiments, the insulating structure 130 and the separation structure 140 are connected by hot melting.

In some embodiments, as shown in FIG. 22, the shell 110 is provided with a pressure relief structure 170. The pressure relief structure 170 is used for releasing internal pressure of the battery cell 100. As an example, when the internal pressure or heat of the battery cell 100 reaches a predetermined threshold, actuation is done to relieve the internal pressure or heat. When the internal pressure or heat of the battery cell 100 reaches a predetermined threshold, the pressure relief structure 170 executes an action or a weak structure provided in the pressure relief structure 170 is damaged, so as to form an opening or channel for releasing the internal pressure or heat. The threshold design varies depending on design requirements. The threshold may depend on the material of one or more of a positive electrode plate, a negative electrode plate, an electrolyte, and a separator in the battery cell 100. The pressure relief structure 170 may be a scratch or a thinned portion on the shell 110, or an explosion-proof structural sheet mounted on the shell 110. The pressure relief structure 170 may be provided on the end cover assembly, or on the side wall or bottom wall of the case. As an example, the pressure relief structure 170 may be integrally formed with the shell 110. As an example, the pressure relief structure 170 may also be provided separately from and connected to the shell 110. The term "actuation" referred to in this example means that the pressure relief structure 170 produces an action or is activated to a certain state, such that the internal pressure and heat of the battery cell 100 is relieved. The action produced by the pressure relief structure 170 may include, but is not limited to: a component in the pressure relief structure 170 moves to form an exhaust channel; at least a portion in the pressure relief structure 170 is ruptured, crushed, torn, opened, or the like. When the pressure relief structure 170 is actuated, high-temperature high-pressure substances inside the battery cell 100 are discharged as emissions outwards from the actuated part. In this way, the pressure and heat in the battery cell 100 may be released under controllable pressure or heat, thereby avoiding potential more serious potential accidents. The emissions from the battery cell 100 include, but is not limited to: electrolyte, dissolved or split positive and negative electrode plates, fragments of a separator, high-temperature high-pressure gas produced by reaction, flames, etc.

In some embodiments, the first wall 111 is provided with the pressure relief structure 170, the first through hole 150 and the pressure relief structure 170 are provided in spaced manner in the length direction of the first wall 111, and the second through hole 160 and the pressure relief structure 170 are provided in spaced manner in the length direction of the first wall 111.

Since the pressure relief structure 170 is provided on the first wall 111, in the Z direction, the pressure relief structure 170 is provided in at part a region close to the insulating structure 130 and a position close to the separation structure 140.

The first through hole 150 and the pressure relief structure 170 are provided in spaced manner in the length direction of the first wall 111. The first through hole 150 is projected onto the first wall 111, and the first through hole 150 and the pressure relief structure 170 are provided in spaced manner. That is, in the thickness direction (Z direction) of the first wall 111, the first through hole 150 and the pressure relief structure 170 are not correspondingly provided.

The second through hole 160 and the pressure relief structure 170 are provided in spaced manner in the length direction of a second wall. The second through hole 160 is projected onto the second wall, and the second through hole 160 and the pressure relief structure 170 are provided in spaced manner. That is, in the thickness direction (Z direction) of the second wall, the second through hole 160 and the pressure relief structure 170 are not correspondingly provided.

In this way of arrangement, since the pressure relief structure, the first through hole 150, and the second through hole 160 are all provided at positions relatively far away from the pressure relief structure 170, the possibility that the anode powder dropped from the battery cell body on the other side of the separation structure 140 and the insulating structure 130 contact the pressure relief structure 170 is reduced, thereby allowing corrosion of the pressure relief structure 170 to be reduced to a certain extent or even avoided.

As shown in FIG. 22, in the X direction, a distance between the first through hole 150 and the pressure relief structure 170 is C2, and C2 is specifically a distance between a side of the first through hole 150 closest to the pressure relief structure 170 and a side of the pressure relief structure 170 closest to the first through hole 150. C2 is greater than 0 mm, that is, the first through hole 150 and the pressure relief structure 170 are provided in spaced manner. Exemplarily, C2 is greater than or equal to 20 mm. Exemplarily, C2 may be 20 mm, 22 mm, 25 mm, 28 mm, 29 mm, or 35 mm, etc. In some embodiments, C2 is greater than or equal to 30 mm. Furthermore, C2 is less than C1/2. Exemplarily, C2 may be 30 mm, 32 mm, 36 mm, 38 mm, 39 mm, 40 mm, or 42 mm, etc.

In some embodiments, the separation structure 140 is provided with a fourth through hole 1411, and the cross-sectional area of the fourth through hole 1411 is less than that of any one first through hole 150.

The fourth through hole 1411 runs through the isolation structure 140 along the thickness direction of the separation structure 140, that is, along the Z direction. The diameter of the fourth through hole 1411 is less than the hole diameter of any one first through holes 150. There may be one or more fourth through holes 1411.

In this way of arrangement, the separation structure 140 is provided with the fourth through hole 1411, such that the separation structure 140 is lighter in weight, thereby reducing the total weight of the battery cell 100. Further, the fourth through hole 1411 may be provided for fluid flow between the two sides of the separation structure 140 in the Z direction, that is, for air flow between the first wall 111 and the electrode assembly 120, thereby improving passage of the air flow between the first wall 111 and the electrode assembly 120.

In some embodiments, as shown in FIG. 4, the separation structure 140 is only provided with two holes, the insulating structure 130 is only provided with two holes, the two holes in one of the separation structure 140 and the insulating structure 130 are both first through holes 150, and the two holes in the other are both second through holes 160.

Exemplarily, the separation structure 140 is only provided with two holes, both holes being the first through holes 150, while the insulating structure 130 is only provided with two holes, both holes being second through holes 160. Alternatively, the separation structure 140 is only provided with two holes, both holes being the second through holes 160, while the insulating structure 130 is only provided with two holes, both holes being first through holes 150. That is, in this way of arrangement, the separation structure 140 is not provided with the fourth through hole 1411.

In this way of arrangement, no other holes are provided in the separation structure 140 and the insulating structure 130 except the first through hole 150 and the second through hole 160, at most only two channels are formed in the insulating structure 130 and the separation structure 140 via the first through hole 150 and the second through hole 160, that is, the quantity of holes in the insulating structure 130 and the separation structure 140 is reduced, the quantity of outflow channels for the anode powder is reduced, and therefore, the amount of the anode powder flowing between the electrode assembly 120 and the case is reduced, reducing the situations of short circuit of the battery 10 or corrosion of the case.

This embodiment further provides an example of a battery 10 based on the aforementioned battery cell 100. The battery 10 includes a battery cell 100 as provided in any of the embodiments above.

The battery 10 may be a battery module. When there are a plurality of battery cells 100, the plurality of battery cells 100 are arranged and fixed to form one battery module.

The battery 10 may further be a battery pack. The battery pack includes a box 200 and a battery cell 100, the battery cell 100 or the battery module being accommodated within the box 200. The box 200 is used to provide an accommodating space for the battery cell 100 or the battery module. The box 200 may be independent of other structures of the electrical apparatus 1, or the box 200 may be a portion of other structures in the electrical apparatus 1. Exemplarily, when the electrical apparatus 1 is a vehicle, the box 200 may be a portion of a chassis of the vehicle. For example, a portion of the box 200 may become at least a portion of a floor of the vehicle, or a portion of the box 200 may become at least a portion of a cross beam and a longitudinal beam of the vehicle.

In the battery pack, there may be a plurality of battery cells 100. The plurality of battery cells 100 may be connected in series or parallel or series-parallel connection, and the series-parallel connection means that the plurality of battery cells 100 are connected in both series and parallel. The plurality of battery cells 100 may be directly connected together in series or in parallel or in parallel-series, and then the whole composed of the plurality of battery cells 100 may be accommodated within the box 200. Of course, the battery 10 may also be in the form that the plurality of battery cells 100 are firstly connected in series or in parallel or in parallel-series to form a battery module, and then a plurality of battery modules are connected in series or in parallel or in parallel-series to form a whole and are accommodated within the box 200.

The battery 10 may further include other structures, for example, the battery 10 may further include a bus component for electrically connecting the plurality of battery cells 100.

It can be understood that, in this example, the battery 10 including the above-mentioned battery cell 100 is only described, and the battery 10 may also include other functional components, which will not be described in detail here.

Since the battery 10 includes the battery cell 100 provided in the above embodiments, the battery 10 at least includes all the technical effects of the above battery cell 100, which will not be described in detail herein.

This embodiment provides an electrical apparatus 1, which includes a battery 10 according to the aforementioned embodiments, the battery 10 being used to provide electrical energy.

Since including the aforementioned battery 10, the electrical apparatus 1 has at least all the beneficial effects of the aforementioned battery 10, which will not be elaborated here.

The electrical apparatus 1 may be, but is not limited to, a mobile phone, a tablet, a laptop, an electric toy, an electric tool, a battery vehicle, an electric vehicle, a ship, a spacecraft, and so on. The electric toy may include fixed or mobile electric toys, such as game consoles, electric car toys, electric ship toys, electric airplane toys, and the like. The spacecraft may include airplanes, rockets, space shuttles, spaceships, and the like.

For the convenience of illustration, the electrical apparatus 1 according to one embodiment of the present application being a vehicle is taken as an example for illustration in the following embodiments. The vehicle may be a fuel vehicle, a gas vehicle, or a new energy vehicle. The new energy vehicle may be a battery electric vehicle, a hybrid electric vehicle, an extended-range vehicle, etc. A battery 10 is provided inside the vehicle, and the battery 10 may be provided at the bottom, the front or the back of the vehicle. The battery 10 may be used to power the vehicle. For example, the battery 10 may be used as an operating power source of the vehicle. The vehicle may further include a controller and a motor. The controller is used to control the battery 10 to power the motor, for example, for meeting operating power requirements when the vehicle is starting, navigating, and driving.

In some embodiments of the present application, the battery 10 not only may serve as an operating power source for the vehicle, but also may serve as a driving power source for the vehicle, thus replacing or partially replacing fuel or natural gas to provide driving power for the vehicle.

In one specific implementation of the present embodiment, there is provided a battery cell 100. The battery cell 100 includes a shell 110, an electrode assembly 120, an insulating structure 130, and a separation structure 140. The shell 110 has an inner cavity, and the shell 110 has a first wall 111. The shell 110 includes a case and an end cover assembly. The case has an opening. The end cover assembly covers the opening of the case to form the inner cavity with the case. A bottom wall and side walls of the case are also a bottom wall and side walls of the shell 110. The end cover assembly constitutes a top wall of the shell 110. The first wall 111 is specifically the bottom wall of the case, that is, the first wall 111 is a wall of the case provided correspondingly to the end cover assembly. The electrode assembly 120 is mounted in the inner cavity, the insulating structure 130 includes an insulating film, the insulating film encloses the outer periphery of the electrode assembly 120, the separation structure 140 includes a bottom guard plate, the bottom guard plate is mounted in the inner cavity and located between the electrode assembly 120 and the first wall 111. Specifically, the separation structure 140 is located outside the insulating film, that is, the insulating film encloses the outside of the electrode assembly 120, partial structure of the insulating film corresponds to the first wall 111, and the separation structure 140 is located between the insulating film and the first wall 111. The separation structure 140 is provided with a first through hole 150, and the insulating film is provided with a second through hole 160. The first through holes 150 and the second through holes 160 are equal in quantity, there are two first through holes 150, there also are two second through holes 160, and the two first through holes 150 and the two second through holes 160 are provided by one to one correspondence. In a direction parallel to the first wall 111, the cross-sectional shape of one of the first through holes 150 is circular, the cross-sectional shape of the other first through hole 150 is runway-shaped, the cross-sectional shapes of the two second through holes 160 are, respectively, the same as those of their corresponding first through holes 150, and the cross-sectional areas of the two second through holes 160 are, respectively, equal to those of the corresponding first through holes 150, that is, projections of the second through holes 160 and their corresponding first through holes 150 on the first wall 111 coincide. In the direction parallel to the first wall 111, one of the two second through holes 160 whose cross-sectional shape is circular is a positioning hole 162, and one whose cross-sectional shape is runway shaped is an alignment hole 161. In this implementation, the two first through holes 150 are provided in spaced manner along an X direction, and in a Y direction, distances between the two first through holes 150 and the two opposite side walls of the case are equal.

In another specific implementation of the present embodiment, there is provided a battery cell 100. The battery cell 100 includes a shell 110, an electrode assembly 120, an insulating structure 130, and a separation structure 140. The shell 110 has an inner cavity, and the shell 110 has a first wall 111. The shell 110 includes a case and an end cover assembly. The case has an opening. The end cover assembly covers the opening of the case to form the inner cavity with the case. A bottom wall and side walls of the case are also a bottom wall and side walls of the shell 110. The end cover assembly constitutes a top wall of the shell 110. The first wall 111 is specifically the bottom wall of the case, that is, the first wall 111 is a wall of the case provided correspondingly to the end cover assembly. The electrode assembly 120 is mounted in the inner cavity, the insulating structure 130 includes an insulating film, the insulating film encloses the outer periphery of the electrode assembly 120, the separation structure 140 includes a bottom guard plate, the bottom guard plate is mounted in the inner cavity and located between the electrode assembly 120 and the first wall 111. Specifically, the separation structure 140 is located outside the insulating film, that is, the insulating film encloses the outside of the electrode assembly 120, partial structure of the insulating film corresponds to the first wall 111, and the separation structure 140 is located between the insulating film and the first wall 111. The separation structure 140 is provided with a first through hole 150, and the insulating film is provided with a second through hole 160. The first through holes 150 and the second through holes 160 are equal in quantity, there are two first through holes 150, there also are two second through holes 160, and the two first through holes 150 and the two second through holes 160 are provided by one to one correspondence. In a direction parallel to the first wall 111, the cross-sectional shape of one of the first through holes 150 is circular, the cross-sectional shape of the other first through hole 150 is runway-shaped, the cross-sectional shapes of the two second through holes 160 are, respectively, the same as those of their corresponding first through holes 150, and the cross-sectional areas of the two second through holes 160 are, respectively, equal to those of the corresponding first through holes 150, that is, projections of the second through holes 160 and their corresponding first through holes 150 on the first wall 111 coincide. In the direction parallel to the first wall 111, one of the two second through holes 160 whose cross-sectional shape is circular is a positioning hole 162, and one whose cross-sectional shape is runway shaped is an alignment hole 161. In this implementation, the two first through holes 150 are provided in spaced manner along an X direction, and in a Y direction, distances between the two first through holes 150 and one side wall of the case are less than distances to the other side wall.

In yet another specific implementation of the present embodiment, there is provided a battery cell 100. The battery cell 100 includes a shell 110, an electrode assembly 120, an insulating structure 130, and a separation structure 140. The shell 110 has an inner cavity, and the shell 110 has a first wall 111. The shell 110 includes a case and an end cover assembly. The case has an opening. The end cover assembly covers the opening of the case to form the inner cavity with the case. A bottom wall and side walls of the case are also a bottom wall and side walls of the shell 110. The end cover assembly constitutes a top wall of the shell 110. The first wall 111 is specifically the bottom wall of the case, that is, the first wall 111 is a wall of the case provided correspondingly to the end cover assembly. The electrode assembly 120 is mounted in the inner cavity, the insulating structure 130 includes an insulating film, the insulating film encloses the outer periphery of the electrode assembly 120, the separation structure 140 includes a bottom guard plate, the bottom guard plate is mounted in the inner cavity and located between the electrode assembly 120 and the first wall 111. Specifically, the separation structure 140 is located outside the insulating film, that is, the insulating film encloses the outside of the electrode assembly 120, partial structure of the insulating film corresponds to the first wall 111, and the separation structure 140 is located between the insulating film and the first wall 111. The separation structure 140 is provided with a first through hole 150, and the insulating film is provided with a second through hole 160. The first through holes 150 and the second through holes 160 are equal in quantity, there are two first through holes 150, there also are two second through holes 160, and the two first through holes 150 and the two second through holes 160 are provided by one to one correspondence. In a direction parallel to the first wall 111, the cross-sectional shape of one of the first through holes 150 is circular, the cross-sectional shape of the other first through hole 150 is runway-shaped, the cross-sectional shapes of the two second through holes 160 are, respectively, the same as those of their corresponding first through holes 150, and the cross-sectional areas of the two second through holes 160 are, respectively, equal to those of the corresponding first through holes 150, that is, projections of the second through holes 160 and their corresponding first through holes 150 on the first wall 111 coincide. In the direction parallel to the first wall 111, one of the two second through holes 160 whose cross-sectional shape is circular is a positioning hole 162, and one whose cross-sectional shape is runway shaped is an alignment hole 161. In this implementation, the first wall 111 is provided with a pressure relief structure 170, and in a Y direction, distances between the two first through holes 150 and one side wall of the case are less than distances to the other side wall. Furthermore, in an X direction and a Z direction, the two first through holes 150 are distributed in spaced manner from the pressure relief structure 170, and the two second through holes 160 are distributed in spaced manner from the pressure relief structure 170.

In still another specific implementation IV of the present embodiment, there is provided a battery cell 100. The battery cell 100 includes a shell 110, an electrode assembly 120, an insulating structure 130, and a separation structure 140. The shell 110 has an inner cavity, and the shell 110 has a first wall 111. The shell 110 includes a case and an end cover assembly. The case has an opening. The end cover assembly covers the opening of the case to form the inner cavity with the case. A bottom wall and side walls of the case are also a bottom wall and side walls of the shell 110. The end cover assembly constitutes a top wall of the shell 110. The first wall 111 is specifically the bottom wall of the case, that is, the first wall 111 is a wall of the case provided correspondingly to the end cover assembly. The electrode assembly 120 is mounted in the inner cavity, the insulating film encloses the outer periphery of the electrode assembly 120, and the separation structure 140 is mounted in the inner cavity and located between the electrode assembly 120 and the first wall 111. Specifically, the separation structure 140 is located outside the insulating film, that is, the insulating film encloses the outside of the electrode assembly 120, partial structure of the insulating film corresponds to the first wall 111, and the separation structure 140 is located between the insulating film and the first wall 111. The separation structure 140 includes a plate body 141, the plate body 141 includes a first surface provided along a thickness direction of the plate body 141, and the first surface is provided with a support block 142. The plate body 141 is located between the insulating film and the first wall 111, and the support block 142 is located between the plate body 141 and the first wall 111. There are four support blocks 142, and the four support blocks 142 are distributed on the first surface in spaced manner. The plate body 141 is provided with two first through holes 150 in run-through manner along its thickness direction, and the insulating film is provided with two second through holes 160. The two first through holes 150 are provided in spaced manner along an X direction, and the two second through holes 160 are provided in one to one correspondence with the two first through holes 150. In a direction parallel to the first wall 111, the cross-sectional shape of one of the first through holes 150 is circular, the cross-sectional shape of the other first through hole 150 is runway-shaped, the cross-sectional shapes of the two second through holes 160 are, respectively, the same as those of their corresponding first through holes 150, and the cross-sectional areas of the two second through holes 160 are, respectively, equal to those of the corresponding first through holes 150, that is, projections of the second through holes 160 and their corresponding first through holes 150 on the first wall 111 coincide. In the direction parallel to the first wall 111, one of the two second through holes 160 whose cross-sectional shape is circular is a positioning hole 162, and one whose cross-sectional shape is runway shaped is an alignment hole 161. In a Y direction, distances between the two first through holes 150 and one side wall of the case are less than distances to the other side wall. The plate body 141 is further provided with a fourth through hole 1411, there are a plurality of fourth through holes 1411, and the plurality of fourth through holes 1411 are distributed in a matrix in a middle region of the plate body 141. Along the X direction, one first through hole 150 is provided on both sides of a matrix structure formed by the plurality of fourth through holes 1411. The plurality of fourth through holes 1411 are all round holes, and the plurality of fourth through holes 1411 are provided with equal diameters, and the diameter of the fourth through holes 1411 is less than that of the first through hole 150 that is a round hole. Each support block 142 is provided with a third through hole 1421 along its thickness direction. The third through holes 1421 in the support blocks 142 have the same shape and the same dimension. The two first through holes 150 are, respectively, provided in one to one correspondence with the third through holes 1421 of two of the support blocks 142. In the direction parallel to the first wall 111, the cross-sectional area of the third through hole 1421 is equal to that of the first through hole 150 with the largest cross-sectional area. In this implementation, the cross-sectional area of the first through hole 150 with the runway-shaped cross-sectional shape is the largest, and thus the cross-sectional area of the third through hole 1421 is equal to that of the first through hole 150 with the runway-shaped cross-sectional shape. Since the cross-sectional area of the second through hole 160 is equal to that of the corresponding first through hole 150, the cross-sectional area of the third through hole 1421 is also equal to that of the second through hole 160 with the runway-shaped cross-sectional shape, that is, the cross-sectional area of the third through hole 1421 is equal to that of the alignment hole 161. Moreover, in this implementation, in the direction parallel to the first wall 111, the cross-sectional shape of the third through hole 1421 is the same as that of the first through hole 150 with the runway-shaped cross-sectional shape, that is, projections of the first through hole 150 with the raceway-shaped cross-sectional shape and the corresponding third through hole 1421 on the first wall 111 coincide.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments may still be modified, or some or all of the technical features therein may be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery cell, comprising:

   a shell, the shell having an inner cavity, the shell having a first wall;
   an electrode assembly, provided inside the inner cavity;

   an insulating structure, at least a portion of the insulating structure being located between the electrode assembly and the first wall;
   a separation structure, the separation structure being provided between the electrode assembly and the first wall;
   one of the insulating structure and the separation structure being provided with at least two first through holes, the other being provided with second through holes respectively corresponding to the first through holes, in a direction parallel to the first wall, the cross-sectional area of the second through hole being greater than or equal to that of the first through hole provided correspondingly thereto, the plurality of second through holes comprising at least one alignment hole;
   the cross-sectional area of the alignment hole being greater than that of the first through hole provided correspondingly thereto, or the cross-sectional area of the alignment hole being greater than that of any other one of the second through holes.

2. The battery cell according to claim 1, wherein the second through hole comprises at least one alignment hole and one positioning hole, the cross-sectional area of the alignment hole is greater than that of the positioning hole, the cross-sectional area of the positioning hole is equal to that of the corresponding first through hole, and the positioning hole is the same as the corresponding first through hole in shape.

3. The battery cell according to claim 2, wherein the cross-sectional area of the first through hole corresponding to the alignment hole is equal to that of the alignment hole, and the first through hole corresponding to the alignment hole is the same as the alignment hole in shape.

4. The battery cell according to claim 3, wherein at least one second through hole and the first through hole provided correspondingly thereto are both round holes, and the two round holes are equal in diameter.

5. The battery cell according to claim 4, wherein the diameter of the round hole is 1 mm-20 mm.

6. The battery cell according to claim 5, wherein the diameter of the round hole is 2.5 mm-7 mm.

7. The battery cell according to any one of claims 1 to 6, wherein in a first direction, the dimension of the alignment hole is greater than that of the first through hole corresponding thereto, or the dimension of the alignment hole is greater than that of other second through holes, the first direction being parallel to a length direction of the first wall

8. The battery cell according to claim 7, wherein the plurality of first through holes are provided in spaced manner in the first direction.

9. The battery cell according to claim 7, wherein in a second direction, the dimension of the first through hole is equal to that of the second through hole corresponding thereto, the second direction being parallel to a width direction of the first wall.

10. The battery cell according to any one of claims 7 to 9, wherein the first through hole has a first inner wall and a second inner wall distributed along the first direction, the alignment hole has a third inner wall and a fourth inner wall distributed along the first direction, as well as a fifth inner wall and a sixth inner wall distributed along the second direction, the first inner wall is the same as the third inner wall in shape, the second inner wall is the same as the third inner wall in shape, and the fifth inner wall and the sixth inner wall are each parallel to the first direction.

11. The battery cell according to claim 10, wherein

    at least one first through hole is a round hole, and the first inner wall, the second inner wall, the third inner wall, and the fourth inner wall are each an arc-shaped inner wall; alternatively,
    at least one first through hole is a rectangular hole, the alignment hole is a rectangular hole, the first inner wall is parallel to the third inner wall, and the second inner wall is parallel to the fourth inner wall; alternatively,
    at least one first through hole is a triangular hole, the alignment hole is a trapezoidal hole, the first inner wall is parallel to the third inner wall, and the second inner wall is parallel to the fourth inner wall.

12. The battery cell according to claim 10, wherein in the first direction, a difference between the dimension of the alignment hole and the dimension of the corresponding first through hole is in a range of greater than 0 mm and less than or equal to 3 mm; alternatively,
    in the first direction, a difference between the dimension of the alignment hole and the dimension of other second through holes is in a range of greater than 0 mm and less than or equal to 3 mm

13. The battery cell according to claim 12, wherein in the first direction, a difference between the dimension of the alignment hole and the dimension of the first through hole is in a range of greater than or equal to 0 mm and less than or equal to 0.5 mm; alternatively,

in the first direction, a difference between the dimension of the alignment hole and the dimension of other second through holes is in a range of greater than or equal to 0 mm and less than or equal to 0.5 mm.

14. The battery cell according to any one of claims 1 to 13, wherein in the second direction, the first through hole is located in a middle region of the insulating structure or the separation structure, the second direction being parallel to the width direction of the first wall.

15. The battery cell according to claim 14, wherein in the second direction, the dimension of the first wall is W1, a distance between the first through hole and a side wall of the shell is W2, and then:

$$|W2 - W1/2| \leq 5 \text{ mm}.$$

16. The battery cell according to claim 15, wherein in the second direction, distances between the first through hole and side walls, on both sides, of the shell are equal.

17. The battery cell according to any one of claims 1 to 16, wherein the plurality of first through holes are symmetrically distributed in pairs relative to a center line of the first wall in the length direction, a center distance of two symmetrical first through holes is C1, a length of the first wall is L, and then C1 = (L - 10 mm, L - 60 mm).

18. The battery cell according to any one of claims 1 to 17, wherein the separation structure is provided between the insulating structure and the first wall, the first through hole is provided in the separation structure, and the second through hole is provided in the insulating structure.

19. The battery cell according to claim 18, wherein the separation structure comprises a plate body, the plate body comprises a first surface provided perpendicular to a thickness direction of the plate body, the first through hole is provided in the plate body in run-through manner along the thickness direction of the plate body, the first surface is provided with a support block, and the support block is provided in a region of the first surface where no first through hole is provided.

20. The battery cell according to claim 18, wherein the separation structure comprises a plate body and a support block, the plate body comprises a first surface provided along a thickness direction of the plate body, the first through hole is provided in the plate body in run-through manner along the thickness direction of the plate body, the first surface is provided with the support block, the support block is provided with a third through hole along a thickness direction of the support block, the third through hole is provided correspondingly to the first through hole, and the third through hole is communicated with the first through hole.

21. The battery cell according to claim 20, wherein the cross-sectional area of the third through hole is greater than or equal to that of the first through hole.

22. The battery cell according to claim 21, wherein there are a plurality of support blocks, the plurality of support blocks are each provided with the third through hole, the plurality of third through holes are the same in shape, and the plurality of third through holes are the same in dimension.

23. The battery cell according to claim 22, wherein the cross-sectional area of each third through hole is equal to that of the alignment hole.

24. The battery cell according to claim 20, wherein at least one lateral edge of the support block is provided flush with at least one lateral edge of the plate body.

25. The battery cell according to any one of claims 1 to 24, wherein the first wall is provided with a pressure relief structure, the first through hole and the pressure relief structure are provided in spaced manner in the length direction of the first wall, and the second through hole and the pressure relief structure are provided in spaced manner in the length direction of the first wall.

26. The battery cell according to claim 25, wherein the separation structure is provided with a fourth through hole, and the cross-sectional area of the fourth through hole is less than that of any one first through hole.

27. The battery cell according to any one of claims 1 to 26, wherein the separation structure is only provided with two holes, the insulating structure is only provided with two holes, the two holes in one of the separation structure and the insulating structure are both the first through holes, and the two holes in the other are both the second through holes.

28. The battery cell according to any one of claims 1 to 27, wherein the insulating structure comprises an insulating film, the insulating film comprises a first portion and a second portion, the first portion is located between the electrode assembly and the first wall, the second portion is connected to the first portion, and the second portion is annular and encloses an outer periphery of the electrode assembly.

29. A battery, comprising the battery cell according to any one of claims 1 to 28.

30. An electrical apparatus, wherein the electrical apparatus comprises the battery according to claim 29, the battery being used for providing electrical energy.

**FIG. 1**

**FIG. 2**

**FIG. 3**

**FIG. 4**

**FIG. 5**

Y

X

L

P2

162

130    110

160 { 161
      162

161

**FIG. 6**

Y

X

161    161

110

150

150

**FIG. 7**

**FIG. 8**

**FIG. 9**

**FIG. 10**

**FIG. 11**

**FIG. 12**

**FIG. 13**

**FIG. 14**

**FIG. 15**

**FIG. 16**

**FIG. 17**

**FIG. 18**

**FIG. 19**

**FIG. 20**

**FIG. 21**

**FIG. 22**

## INTERNATIONAL SEARCH REPORT

| International application No. |
| --- |
| **PCT/CN2024/088290** |

| A. | CLASSIFICATION OF SUBJECT MATTER |
| --- | --- |

H01M 50/593(2021.01)i;  H01M 50/586(2021.01)i;  H01M 50/59(2021.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; DWPI; VEN; ENTXT; CNKI: 电池, 绝缘件, 底托板, 隔离件, 孔, 定位, 面积, 大于, 小于, battery, insulation, bottom panel, separator, hole, position, area, larger than, smaller than

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 217641710 U (REPT BATTERO ENERGY CO., LTD.) 21 October 2022 (2022-10-21) description, paragraphs 36-52, and figure 1 | 1-20, 24-30 |
| A | CN 216389666 U (HEFEI GOTION HIGH-TECH POWER ENERGY CO., LTD.) 26 April 2022 (2022-04-26) description, paragraphs 47-84, and figures 1-16 | 1-30 |
| A | CN 202839777 U (DING ZHENRONG) 27 March 2013 (2013-03-27) entire document | 1-30 |
| A | CN 209016155 U (YINLONG ENERGY CO., LTD.) 21 June 2019 (2019-06-21) entire document | 1-30 |
| A | JP 2018120789 A (TOYOTA INDUSTRIES CORP.) 02 August 2018 (2018-08-02) entire document | 1-30 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 July 2024** | **25 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/088290**

| Patent document cited in search report | | | Publication date (day/month/year) | Patent family member(s) | | | Publication date (day/month/year) |
|---|---|---|---|---|---|---|---|
| CN | 217641710 | U | 21 October 2022 | None | | | |
| CN | 216389666 | U | 26 April 2022 | None | | | |
| CN | 202839777 | U | 27 March 2013 | None | | | |
| CN | 209016155 | U | 21 June 2019 | None | | | |
| JP | 2018120789 | A | 02 August 2018 | JP | 6878914 | B2 | 02 June 2021 |

Form PCT/ISA/210 (patent family annex) (July 2022)

**EP 4 664 667 A1**

**Patent documents cited in the description**

- CN 202322048883